(19) Europäisches Patentamt / European Patent Office / Office européen des brevets

(11) **EP 4 234 139 A1**

(12) **EUROPÄISCHE PATENTANMELDUNG**

(43) Veröffentlichungstag:
**30.08.2023 Patentblatt 2023/35**

(21) Anmeldenummer: **22158518.5**

(22) Anmeldetag: **24.02.2022**

(51) Internationale Patentklassifikation (IPC):
**B23C 5/18** *(2006.01)* **B23C 5/04** *(2006.01)*
**B27G 13/02** *(2006.01)*

(52) Gemeinsame Patentklassifikation (CPC):
**B23C 5/18; B23C 5/04; B27G 13/02;**
B23C 2210/0485; B23C 2250/16

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Ledermann GmbH & Co. KG**
**72160 Horb am Neckar (DE)**

(72) Erfinder:
• **Dressler, Martin**
**73614 Schorndorf (DE)**
• **Grotzke, Holger**
**72160 Horb-Rexingen (DE)**

(74) Vertreter: **Karzel, Philipp et al**
**Patentanwälte**
**Dipl.-Ing. W. Jackisch & Partner mbB**
**Menzelstraße 40**
**70192 Stuttgart (DE)**

(54) **BEARBEITUNGSWERKZEUG**

(57) Die Erfindung betrifft ein Bearbeitungswerkzeug für die zerspanende Bearbeitung von Werkstoffen, das zum drehenden Antrieb um eine Drehachse (50) vorgesehen ist, wobei das Bearbeitungswerkzeug (1) einen Grundkörper (2) mit einer Schneidenträgerfläche aufweist, durch den die Drehachse (50) verläuft. Auf der Schneidenträgerfläche sind Schneidkörper (3, 13, 23, 33, 43, 53, 63, 73, 83, 93, 103, 113, 123, 133, 203, 213, 223, 303, 313, 323, 353) mit je einer Schneidkante (4, 14, 24, 34, 44, 54, 64, 74, 84, 94, 104, 114, 124, 134, 204, 214, 224, 304, 314, 324, 354) angeordnet, die (4, 14, 24, 34, 44, 54, 64, 74, 84, 94, 104, 114, 124, 134, 204, 214, 224, 304, 314, 324, 354) sich während der zerspanenden Bearbeitung in einer um die Drehachse (50) umlaufenden Drehrichtung (49) drehen. Die Schneidkanten (4, 14, 24, 34, 44, 54, 64, 74, 84, 94, 104, 114, 124, 134, 204, 214, 224, 304, 314, 324, 354) einer Gruppe umfassend mehrere Schneidkörper (3, 13, 23, 33, 43, 53, 63, 73, 83, 93, 103, 113, 123, 133, 203, 213, 223, 303, 313, 323, 353) überlappen sich lückenlos bezüglich der Richtung senkrecht zur Drehrichtung (49) und bilden so eine Gesamtschneide. Eine Schneidkante (3, 103, 203, 303) der mehreren Schneidkörper (3, 13, 23, 33, 43, 53, 63, 73, 83, 93, 103, 113, 123, 133, 203, 213, 223, 303, 313, 323, 353) der Gruppe ist eine Anfangsschneidkante der Gesamtschneide und eine Schneidkante (53, 353) der mehreren Schneidkörper (3, 13, 23, 33, 43, 53, 63, 73, 83, 93, 103, 113, 123, 133, 203, 213, 223, 303, 313, 323, 353) der Gruppe ist eine Endschneidkante der Gesamtscheide. Bezüglich der Richtung senkrecht zur Drehrichtung (49) vollständig zwischen der Anfangsschneidkante und der Endschneidkante liegt ein Zwischenbereich der Gesamtschneide. Sämtliche Schneidkanten (4, 14, 24, 34, 44, 54, 64, 74, 84, 94, 104, 114, 124, 134, 204, 214, 224, 304, 314, 324, 354) des Bearbeitungswerkzeugs (1) sind zwischen Endpunkten (7, 8) der Gesamtschneide angeordnet, wobei der eine Endpunkt (7) der Anfangsschneidkante und der andere Endpunkt (8) der Endschneidkante zugeordnet ist. Eine gedachte Helixlinie (6) verläuft von der Anfangsschneidkante zu der Endschneidkante. Die Helixlinie (6) weist eine Zentralachse auf, die der Drehachse (50) entspricht. Die Helixlinie (6) läuft zumindest teilweise um die Zentralachse um. Die Helixlinie (6) weist eine Steigung auf. Die Steigung entspricht dem Quotienten aus einem Fortschritt der Helixlinie (6) in Richtung senkrecht zur Drehrichtung (49) und einem Fortschritt der Helixlinie (6) bezüglich eines Drehwinkels um die Drehachse (50). Die Steigung der Helixlinie (6) ist insbesondere konstant. Sämtliche Schneidkanten (4, 14, 24, 34, 44, 54, 64, 74, 84, 94, 104, 114, 124, 134, 204, 214, 224, 304, 314, 324, 354) der Schneidkörper (3, 13, 23, 33, 43, 53, 63, 73, 83, 93, 103, 113, 123, 133, 203, 213, 223, 303, 313, 323, 353) der Gruppe sind zumindest teilweise auf der Helixlinie (6) angeordnet. Die Gruppe weist eine Mindestzahnzahl auf, die durch die Anzahl von im Zwischenbereich der Gesamtschneide in Drehrichtung (49) des Bearbeitungswerkzeugs (1) mindestens hintereinanderliegenden Schneidkanten der Schneidkörper der Gruppe definiert ist. Die Schneidkanten (4, 14, 24, 34, 44, 54, 64, 74, 84, 94, 104, 114, 124, 134, 204, 214, 224, 304, 314, 324, 354) der Gruppe überlappen sich bezüglich der Richtung senkrecht zur Drehrichtung (49) derart, dass die Mindestzahnzahl mindestens 2, insbesondere mindestens 3 ist.

**(Forts. nächste Seite)**

Fig. 2c

## Beschreibung

Die Erfindung betrifft ein Bearbeitungswerkzeug für die zerspanende Bearbeitung von Werkstoffen, insbesondere von Holz und holzartigen Werkstoffen, nach dem Oberbegriff des Anspruchs 1.

Die Schneidkanten der mehreren Schneidkörper eines solchen Bearbeitungswerkzeugs bilden in der Regel im Stand der Technik gemeinsam eine Schneidlinie, die sich zumindest auch in Richtung senkrecht zur Drehrichtung des Bearbeitungswerkzeugs, insbesondere in Richtung der Drehachse und/oder in Richtung radial zur Drehachse über die gesamte Ausdehnung des Grundkörpers, insbesondere in Richtung der Drehachse und/oder in Richtung radial zur Drehachse erstreckt. Hierbei sind Referenzpunkte der Schneidkanten der verschiedenen mehreren Schneidkörper in Richtung senkrecht zur Drehrichtung zueinander beabstandet. Die Referenzpunkte können beispielsweise als Ecke einer Schneidkante oder als Mittelpunkt einer Schneidkante bezüglich der Richtung der Drehachse definiert sein. Die jeweiligen Schneidkanten überlappen sich in Richtung der Drehachse und/oder in Richtung radial zur Drehachse. Die Referenzpunkte der Schneidkanten der mehreren Schneidkörper sind bezüglich der Drehachse in einem Winkelabstand zueinander angeordnet. Typischerweise bestehen die Schneidkanten der mehreren Schneidkörper im Stand der Technik aus hochharten Schneidstoffen, wie beispielsweise polykristallinem Diamant. Dieses Material kann nur in begrenzten Abmessungen verarbeitet werden. Dies ist einer der möglichen Gründe, weshalb die Schneidlinie am Grundkörper aus den Schneidkanten der mehreren Schneidkörper zusammengesetzt wird. Die Referenzpunkte der Schneidkanten der mehreren Schneidkörper weisen bezüglich der Drehachse einen Winkelabstand zueinander auf.

Dieser Winkelabstand der Schneidkanten zueinander ist erforderlich, damit die Schneidkanten isoliert voneinander erodiert oder geschliffen werden können. Beim Erodier- oder Schleifvorgang einer Schneidkante werden durch den Winkelabstand die Schneidkanten von in Richtung der Drehachse benachbarter Schneidkörper nicht beeinträchtigt. Hierfür genügt in der Regel ein Winkelabstand zwischen den Referenzpunkten von 5° bis 10°.

Damit die aus den Schneidkanten der mehreren Schneidkörper gebildete Schneidlinie keine Lücken aufweist, überlappen sich die Schneidkanten bezüglich der Richtung senkrecht zur Drehrichtung, insbesondere bezüglich der Richtung der Drehachse und/oder bezüglich der Richtung radial zur Drehachse. In Drehrichtung des Bearbeitungswerkzeugs greifen die sich überlappenden Schneidkanten einer Schneidlinie in kurzem Abstand in einer Eingriffsrichtung auf dem Werkstück ein. In der Regel sind mehrere Schneidlinien in Drehrichtung hintereinander am Grundkörper des Bearbeitungswerkzeugs angeordnet, wodurch ein mehrzahniges Werkzeug gebildet ist. Die Überlappungsbereiche der verschiedenen Gesamtschneiden liegen in Drehrichtung hintereinander. Man spricht von einer Verdoppelung der Zahnzahl im Überlappungsbereich. Die Zahnzahl ist die Anzahl der verschiedenen Schneidkanten der verschiedenen Schneidkörper, die in Drehrichtung des Bearbeitungswerkzeugs während einer Umdrehung des Bearbeitungswerkzeugs hintereinander in das Werkstück eingreifen. Beim Bearbeitungswerkzeug nach dem Stand der Technik zeichnen sich die Überlappungsbereiche der Schneidkanten der mehreren Schneidkörper als Spuren im Werkstück ab.

Der Erfindung liegt die Aufgabe zugrunde, ein gattungsgemäßes Bearbeitungswerkzeug derart weiterzubilden, dass die Bearbeitungsspuren auf einem mit dem Bearbeitungswerkzeug bearbeiteten Werkstück minimiert sind.

Diese Aufgabe wird durch ein Bearbeitungswerkzeug mit den Merkmalen des Anspruchs 1 gelöst.

Erfindungsgemäß überlappen sich die Schneidkanten der mehreren Schneidkörper der Gruppe lückenlos bezüglich der Richtung senkrecht zur Drehrichtung und bilden so eine Gesamtschneide. Die Gruppe der mehreren Schneidkörper wird auch als mehrere Schneidkörper bezeichnet. Eine Schneidkante der mehreren Schneidkörper ist eine Anfangsschneidkante der Gesamtscheide. Eine Schneidkanten der mehreren Schneidkörper ist eine Endschneidkante. Die Anfangsschneidkante bildet bezüglich der Richtung senkrecht zur Drehrichtung den Anfang der Gesamtschneide. Die Endschneidkante bildet bezüglich der Richtung senkrecht zur Drehrichtung das Ende der Gesamtschneide. Die Gesamtschneide besitzt einen Zwischenbereich. Der Zwischenbereich liegt bezüglich der Richtung senkrecht zur Drehrichtung vollständig zwischen der Anfangsschneidkante und der Endschneidkante. Der Zwischenbereich erstreckt sich bezüglich der Richtung senkrecht zur Drehrichtung insbesondere unterbrechungsfrei zwischen der Anfangsschneidkante und der Endschneidkante.

Beispielsweise bei einem Bearbeitungswerkzeug mit im Wesentlichen zylindrischem Grundkörper liegt der Zwischenbereich zwischen Ebenen senkrecht zur Drehachse, von denen die eine die Anfangsschneidkante an ihrem der Endschneidkante zugewandten Ende tangiert und von denen die andere die Endschneidkante an ihrem der Anfangsschneidkante zugewandten Enden tangiert.

Sämtliche Schneidkanten des Bearbeitungswerkzeugs sind zwischen Endpunkten der Gesamtschneide angeordnet. Der eine Endpunkt ist der Anfangsschneidkante zugeordnet. Der andere Endpunkt ist der Endschneidkante zugeordnet. Insbesondere sind sämtliche Schneidkanten des Bearbeitungswerkzeugs bezüglich der Richtung senkrecht zur Drehrichtung zwischen Endpunkten der Gesamtschneide angeordnet.

Eine gedachte Helixlinie verläuft von der Anfangsschneidkante zu der Endschneidkante. Insbesondere verläuft die gedachte Helixlinie unterbrechungsfrei von der Anfangsschneidkante zu der Endschneidkante. Die Helixlinie weist eine Zentralachse auf, die der Drehachse entspricht. Die Helixlinie läuft zumindest teilweise, zweckmäßig vollständig, insbesondere mehrfach um die Zentralachse um. Die Helixlinie weist eine Steigung auf. Die Steigung entspricht dem Quotienten aus einem Fortschritt der Helixlinie in Richtung senkrecht zur Drehrichtung und einem Fortschritt der Helixlinie bezüglich eines Drehwinkels um die Drehachse. Zweckmäßig ist die Steigung der Helixlinie größer als Null, insbesondere für jeden Punkt der Helixlinie. Insbesondere ist die Steigung der Helixlinie konstant. Insbesondere ist der Fortschritt der Helixlinie in Richtung senkrecht zur Drehrichtung proportional zu dem Fortschritt der Helixlinie bezüglich des Drehwinkels um die Drehachse. Insbesondere besitzt die gedachte Helixlinie die Form einer Helix. Insbesondere besitzt die gedachte Helixlinie die Form einer ebenen Spirale. Es kann aber auch vorgesehen sein, dass die Helixlinie sich aus einer ebenen Spirale und einer Helix zusammensetzt. Dies kann beispielsweise bei einem zylindrischen Grundkörper der Fall sein, bei dem die Helixlinie auf der Stirnfläche in Form einer ebenen Spirale und/oder an der Umfangfläche in Form einer Helix verläuft. Es kann auch vorgesehen sein, dass die gedachte Helixlinie die Form einer Helix mit variablem Abstand zur Drehachse besitzt. Dies ist beispielsweise bei einer Schneidenträgerfläche mit einer Kontur der Fall. Insbesondere weist die Helixlinie zur Schneidenträgerfläche einen senkrecht zur Schneidenträgerfläche gemessenen Abstand auf. Insbesondere ist der Abstand konstant. Bevorzugt sind sämtliche Schneidkanten der mehreren Schneidkörper zumindest teilweise auf der Helixlinie angeordnet. Insbesondere besitzt jede Schneidkante der mehreren Schneidkörper einen Schnittpunkt mit der Helixlinie. Es kann auch vorgesehen sein, dass die gesamte Schneidkante einer der Schneidkanten der mehreren Schneidkörper bezüglich einer Richtung senkrecht auf die Schneidenträgerfläche über der Helixlinie angeordnet ist.

Die mehreren Schneidkörper weisen eine Mindestzahnzahl auf. Die Mindestzahnzahl ist durch die Anzahl von im Zwischenbereich der Gesamtschneide in Drehrichtung des Bearbeitungswerkzeugs mindestens hintereinanderliegenden Schneidkanten der Schneidkörper der mehreren Schneidkörper definiert. Der in Drehrichtung hinter der gesamten Anfangsschneidkante und hinter der gesamten Endschneidkante liegende Bereich wird bei der Bestimmung der Mindestzahnzahl der mehreren Schneidkörper nicht berücksichtigt. Bei der Bestimmung der Mindestzahnzahl werden nur Schneidkanten der mehreren Schneidkörper berücksichtigt. Schneidkanten von Schneidkörpern, die nicht zu den mehreren Schneidkörpern zählen, werden nicht berücksichtigt.

Erfindungsgemäß überlappen sich die Schneidkanten der mehreren Schneidkörper derart, dass die Mindestzahnzahl der mehreren Schneidkörper bezüglich der Richtung senkrecht zur Drehrichtung, insbesondere bezüglich der Richtung der Drehachse derart überlappen, dass die Mindestzahnzahl mindestens 2, insbesondere mindestens 3, insbesondere mindestens 4 ist.

Dadurch kann eine große Zahnzahl des gesamten Bearbeitungswerkzeugs erreicht werden, ohne dass mehrere Schneidlinien in Drehrichtung hintereinander angeordnet sein müssen. Mit lediglich einer einzigen Gruppe von mehreren Schneidkörpern kann eine beliebig große Zahnzahl erreicht werden. Es ist nicht erforderlich, dass mehrere Gesamtschneiden, die sich jeweils aus mehreren Schneidkanten zusammensetzen, bezüglich der Drehrichtung hintereinander angeordnet werden müssen. Insbesondere kann dadurch vermieden werden, dass mehrere Endpunkte von Schneidkanten in Drehrichtung hintereinander liegen. Dadurch kann sich keine hieraus resultierende Spur im Werkstück abzeichnen. Die Bearbeitungsspuren auf einem mit dem Bearbeitungswerkzeug bearbeiteten Werkstück sind minimiert.

Vorteilhaft umfasst das Bearbeitungswerkzeug lediglich eine einzige Gruppe von Schneidkörpern, deren Schneidkanten sich zwischen den Endpunkten der Gesamtschneide lückenlos bezüglich der Richtung senkrecht zur Drehrichtung überlappen und deren Schneidkanten zumindest teilweise auf einer Helixlinie angeordnet sind.

In besonderer Ausgestaltung der Erfindung ist vorgesehen, dass durch den Grundkörper die Drehachse in einer Axialrichtung verläuft, und dass sich die Schneidkanten der mehreren Schneidkörper lückenlos bezüglich der Axialrichtung überlappen und so die Gesamtschneide bilden. Insbesondere erstreckt sich die Richtung senkrecht zur Drehrichtung ausschließlich in Richtung der Drehachse. Insbesondere liegt der Zwischenbereich der Gesamtschneide bezüglich der Axialrichtung vollständig zwischen der Anfangsschneidkante und der Endschneidkante. Insbesondere sind sämtliche Schneidkanten des Bearbeitungswerkzeugs bezüglich der Axialrichtung im Bereich der Gesamtschneide angeordnet. Insbesondere läuft um die Drehachse eine gedachte Wendelfläche um. Die Wendelfläche ist in Bezug auf ein Koordinatensystem, dessen Ursprung auf der Drehachse (z-Achse) liegt und dass eine Polachse (x-Achse) aufweist, die senkrecht zur Drehachse verläuft und gegen die in der senkrecht zur Drehachse verlaufenden xy-Ebene der Winkel $\alpha$ gemessen ist, wie folgt parametrisiert:

$$x = r \cos(\alpha)$$

$$y = r \sin(\alpha)$$

$$z = f(\alpha),$$

wobei r und $\alpha$ alle reellen Werte annehmen, also von $-\infty$

bis +∞ laufen und f(a) eine Funktion mit f'($\alpha$) > 0 ist. Insbesondere ist f(a) eine stetige Funktion. Insbesondere gilt f($\alpha$) = c$\alpha$, wobei die Konstante c > 0 ist.

Zweckmäßig sind sämtliche Schneidkanten der mehreren Schneidkörper zumindest teilweise auf der Wendelfläche angeordnet. Insbesondere schneidet jede Schneidkante der mehreren Schneidkörper die Wendelfläche. Es kann auch vorgesehen sein, dass eine, mehrere oder alle Schneidkanten der mehreren Schneidkörper vollständig in der Wendelfläche liegen. Die zumindest teilweise Anordnung der Schneidkanten der mehreren Schneidkörper auf der Wendelfläche kann anstatt oder auch zusätzlich zur teilweisen Anordnung auf der Helixlinie vorgesehen sein. Insbesondere überlappen sich die Schneidkanten der mehreren Schneidkörper bezüglich der Axialrichtung derart, dass die Mindestzahnzahl mindestens 2, insbesondere mindestens 3, insbesondere mindestens 4 ist.

Vorteilhaft überlappen sich die Schneidkanten der mehreren Schneidkörper, die die Gesamtschneide bilden, bezüglich der Richtung senkrecht zur Drehrichtung jeweils nur teilweise gegenseitig. Dadurch kann eine hohe Zahnzahl erreicht werden und gleichzeitig können die Schneidkanten der mehreren Schneidkörper so angeordnet werden, dass sich ihre Endpunkte bezüglich der Richtung senkrecht zur Drehrichtung zuverlässig nicht überlappen. In Drehrichtung liegt dann hinter einem Endpunkt einer Schneidkante der mehreren Schneidkörper kein weiterer Endpunkt einer Schneidkante der mehreren Schneidkörper. Dadurch ergibt sich ein Schnittbild auf dem Werkzeug, in dem keinerlei zusammenhängende, durchgängige Spuren erkennbar sind.

Insbesondere weist jede Schneidkante der mehreren Schneidkörper genau einen Referenzpunkt auf. Insbesondere liegt der Referenzpunkt in Richtung senkrecht zur Drehrichtung in der Mitte der Schneidkante. Zweckmäßig sind die Referenzpunkte der Schneidkanten der mehreren Schneidkörper in Richtung senkrecht zur Drehrichtung zueinander beabstandet. Insbesondere sind in Richtung senkrecht zur Drehrichtung unmittelbar benachbarte Referenzpunkte der Schneidkanten der mehreren Schneidkörper bezüglich der Drehachse jeweils in Winkelabständen zueinander angeordnet.

Insbesondere ist vorgesehen, dass die Winkelabstände der in Richtung senkrecht zur Drehrichtung unmittelbar benachbarten Referenzpunkte der Schneidkanten der mehreren Schneidkörper bezüglich der Drehachse jeweils ein ganzzahliges Vielfaches von Winkelwerten aus einem Winkelbereich betragen.

Die Menge der ganzzahligen Vielfachen umfasst auch das Einfache. Winkelabstände können auch dem Einfachen eines Winkelwerts aus dem Winkelbereich entsprechen.

Bevorzugt weisen die Referenzpunkte der Schneidkanten der mehreren Schneidkörper alle eine gemeinsame, gleiche Eigenschaft bezüglich ihrer Position auf. Der Referenzpunkt einer Schneidkante liegt insbesondere bezüglich der Richtung senkrecht zur Drehrichtung in der Mitte der Schneidkante. Bevorzugt liegt der Referenzpunkt bezüglich der Richtung der Drehachse und/oder bezüglich der Richtung radial zur Drehachse in der Mitte der Schneidkante. Die Drehrichtung wird auch als Umfangsrichtung bezeichnet. Die Drehrichtung läuft um die Drehachse um. Bei Drehung in Drehrichtung dreht sich das Bearbeitungswerkzeug in die für den Spanabtrag vorgesehene Richtung.

Bei den mehreren Schneidkörpern kann es sich um sämtliche Schneidkörper handeln, die an dem Grundkörper angeordnet sind. Es kann sich aber auch um eine Gruppe von Schneidkörpern handeln, die lediglich eine Teilmenge der sämtlichen Schneidkörper darstellt. Auch bei Verwendung des Begriffs "Gruppe" für die mehreren Schneidkörper kann es sich hierbei um sämtliche Schneidkörper des Bearbeitungswerkzeugs handeln. Die mehreren Schneidkörper umfassen mindestens drei, insbesondere mindestens vier, insbesondere mindestens fünf Schneidkörper. Die mehreren Schneidkörper werden auch als Gruppe bezeichnet.

Die Winkelwerte liegen bevorzugt in einem Winkelbereich. Insbesondere liegen die Winkelwerte in einem Winkelbereich von 10° bis 350°, insbesondere von 30° bis 330°, insbesondere von 60° bis 270°, bevorzugt von 90° bis 180°. Durch den sich daraus ergebenden Winkelabstand von in Richtung senkrecht zur Drehrichtung unmittelbar benachbarten Referenzpunkten der mehreren Schneidkörper greifen die beiden zugehörigen Schneidkanten mit einem Abstand in die Oberfläche des bearbeiteten und gleichzeitig mit einem Vorschub vorgeschobenen Werkstücks ein. Für den Fall, dass sich diese beiden Schneidkanten mit in Richtung senkrecht zur Drehrichtung unmittelbar benachbarten Referenzpunkten in Richtung senkrecht zur Drehrichtung überlappen, zeichnen sich diese Überlappungsbereiche nicht als zusammenhängende Spur in der Oberfläche eines mit dem erfindungsgemäßen Bearbeitungswerkzeug bearbeiteten Werkstücks ab. Die Spuren, die die Schneidkanten der mehreren Schneidkörper mit unmittelbar benachbarten Referenzpunkten auf dem Werkstück hinterlassen, sind aufgrund des durch den Winkelabstand der Referenzpunkte bewirkten Winkelversatzes auf dem Werkstück in Vorschubrichtung zueinander beabstandet.

Der Abstand zwischen den Eingriffsstellen der Schneidkanten der mehreren Schneidkörper mit in Richtung senkrecht zur Drehrichtung unmittelbar benachbarten Referenzpunkten auf dem Werkstück ist wesentlich größer als im Stand der Technik. Dadurch werden die Eingriffsstellen von den Schneidkanten mit unmittelbar benachbarten Referenzpunkten auf dem Werkstück nicht als zusammenhängende Spur wahrgenommen.

Zweckmäßig sind die Winkelabstände alle gleich groß.

Insbesondere erstreckt sich der Winkelbereich von einem ersten Grenzwert bis zu einem zweiten Grenzwert. Der erste Grenzwert entspricht insbesondere der Differenz aus dem Betrag des Goldenen Winkels und 5°. Der zweite Grenzwert entspricht insbesondere der Summe aus dem Betrag des Goldenen Winkels und 5°. Der Goldene Winkel liegt innerhalb des Winkelbereichs und zählt zu diesem dazu. Demnach liegen die Winkelwerte insbesondere in einem Winkelbereich von +/- 5° bezüglich des Goldenen Winkels. Die Randwerte sind Bestandteil des Winkelbereichs. Der Goldene Winkel ist so definiert, dass die Summe aus dem Goldenen Winkel und einem Gegenwinkel den Vollwinkel ergibt, und dass das Verhältnis von Goldenem Winkel zu Gegenwinkel gleich dem Verhältnis von Gegenwinkel zu Vollwinkel ist. Der Vollwinkel entspricht 360°. Anders ausgedrückt ergibt die Summe aus dem Betrag des Goldenen Winkels und dem Betrag des Gegenwinkels 360°, und das Verhältnis von Goldenem Winkel zu Gegenwinkel ist gleich dem Verhältnis von Gegenwinkel zu 360°. Der Betrag des Gegenwinkels entspricht der Differenz aus 360° und dem Betrag des Goldenen Winkels. Der Goldene Winkel ist kleiner als 360°. Der Goldene Winkel ergibt sich bei der Teilung des Vollwinkels im Goldenen Schnitt. Der kleinere der dabei erhaltenen beiden Winkel wird als Goldener Winkel bezeichnet. Bei der Teilung des Vollwinkels im Goldenen Schnitt wird 360° durch die Goldene Zahl Φ geteilt. Die Goldene Zahl Φ lässt sich durch nachfolgende Formel berechnen:

$$\Phi = (1+\sqrt{5})/2 \approx 1{,}6180339887.$$

Die Goldene Zahl Φ entspricht dem Verhältnis zweier aufeinander folgender Folgenglieder $f_{n+i}$ und $f_n$ der Fibonacci-Folge für $n \rightarrow \infty$. Die Fibonacci-Folge $f_1$, $f_2$, $f_3$ ... ist durch das rekursive Bildungsgesetz

$$f_n = f_{n-1}+f_{n-2} \text{ für } n \geq 3$$

mit den Anfangswerten

$$f_1 = f_2 = 1$$

definiert. Für die Goldene Zahl Φ gilt:

$$\Phi = \lim_{n\to\infty} \frac{f_{n+1}}{f_n}.$$

Der Goldenen Winkel beträgt:

$$360° - 360°/\Phi \approx 137{,}507764° \approx 137{,}5°.$$

Die Winkelwerte liegen demnach bevorzugt in einem Winkelbereich von ungefähr 132,5° bis ungefähr 142,5°.
Alternativ kann auch vorgesehen sein, dass die Winkelwerte in einem Winkelbereich von 132,5° bis 142,5° liegen.
Die Drehrichtung läuft kreisförmig um die Drehachse um. Die Richtung senkrecht zur Drehrichtung ist eine Richtung, die in Ebenen liegt, die die Drehachse enthalten. Die Beabstandungsrichtung von in Richtung senkrecht zur Drehrichtung zueinander beabstandeten Referenzpunkten ergibt sich daraus, dass die zugehörigen Schneidkanten am Grundkörper des Bearbeitungswerkzeugs bzw. an der Oberfläche des Grundkörpers angeordnet sind. Die Oberfläche des Grundkörpers, an der die Schneidkörper angeordnet sind, wird auch als Schneidenträgerfläche bezeichnet. Die Richtung senkrecht zur Drehrichtung kann auch entlang einer Oberflächenkontur des Grundkörpers verlaufen, die in der zugehörigen Ebene, die die Drehachse enthält, ein kurviges Profil aufweist. In diesem Fall folgt die Richtung senkrecht zur Drehrichtung diesem kurvigen Profil und zeigt dann dementsprechend an unterschiedlichen Stellen auf der Oberfläche des Grundkörpers in unterschiedliche Richtungen. Die Richtung senkrecht zur Drehrichtung folgt der Schnittlinie zwischen der Schneidenträgerfläche und einer Ebene, in der die Drehachse liegt. Insbesondere ist die Richtung senkrecht zur Drehrichtung die Richtung der Drehachse. Insbesondere ist die Richtung senkrecht zur Drehrichtung die Richtung radial zur Drehachse. Insbesondere setzt sich die Richtung senkrecht zur Drehrichtung aus einem Anteil der Richtung der Drehachse und einem Anteil der Richtung radial zur Drehachse zusammen. Insbesondere verläuft die Richtung senkrecht zur Drehrichtung entlang der Schneidenträgerfläche. Insbesondere variiert die Richtung senkrecht zur Drehrichtung entlang der Schneidenträgerfläche.
Insbesondere sind die in Richtung senkrecht zur Drehrichtung zueinander beabstandeten Referenzpunkte in Richtung der Drehachse und/oder in Richtung radial zur Drehachse zueinander beabstandet. In diesem Fall sind in Richtung senkrecht zur Drehrichtung unmittelbar benachbarte Referenzpunkte in Richtung der Drehachse und/oder in Richtung radial zur Drehachse unmittelbar benachbart.
Durch die aus den angegebenen Winkelwerten bestimmten Winkelabstände der Referenzpunkte zueinander ergibt sich eine ideale Verteilung der mehreren Schneidkörper am Grundkörper bezüglich der Umfangsrichtung um die Drehachse des Bearbeitungswerkzeugs. Anders ausgedrückt ergibt sich eine ideale Verteilung der mehreren Schneidkörper in Drehrichtung des Bearbeitungswerkzeugs.
Die Kombination aus einer Beabstandung der Referenzpunkte der Schneidkanten der mehreren Schneidkörper in Richtung senkrecht zur Drehrichtung, insbesondere in Richtung der Drehachse und/oder in Richtung radial zur Drehachse, und der Anordnung der Referenzpunkte in Winkelabständen, die jeweils einem ganzzahligen Vielfachen von Winkelwerten aus dem Winkelbereich um den Goldenen Winkel herum entsprechen, ergibt eine ideale Verteilung der Referenzpunkte der Schneidkanten der mehreren Schneidkörper und damit auch der mehreren Schneidkörper selbst auf der Außenfläche des Grundkörpers. Aufgrund dieser regelmäßigen Verteilung lassen sich viel mehr Schneidkörper mit Schneidkanten an der Umfangsfläche anordnen als im Stand der Technik. Dadurch kann die Schnittleistung erhöht und die Bearbeitungszeit minimiert werden.

Die Kombination aus einer Beabstandung der Referenzpunkte der Schneidkanten der mehreren Schneidkörper in Richtung senkrecht zur Drehrichtung, insbesondere in Richtung der Drehachse und/oder in Richtung radial zur Drehachse, und der Anordnung der Referenzpunkte in Winkelabständen, die jeweils einem ganzzahligen Vielfachen von Winkelwerten aus dem Winkelbereich um den Goldenen Winkel herum entsprechen, hat einen weiteren positiven Effekt zur Folge. Bei der Bearbeitung eines Werkstücks mit einem Bearbeitungswerkzeug nach dem Stand der Technik sind die Referenzpunkte der Schneidkanten der mehreren Schneidkörper beispielsweise in Winkelabständen von 5° zueinander angeordnet. Zudem sind in Drehrichtung mehrere Schneidlinien hintereinander vorgesehen. Beispielsweise können vier Schneidlinien jeweils in einem Winkelabstand von 90° zueinander angeordnet sein. Bei der Bearbeitung eines Werkstücks mit einem konventionellen Bearbeitungswerkzeug kommt es aufgrund des Winkelversatzes der Schneidlinien zueinander zu zeitlich und räumlich regelmäßig beabstandeten Eingriffsstößen. Diese regelmäßigen Eingriffsstöße regen sowohl im Bearbeitungswerkzeug als auch im bearbeiteten Werkstück Vibrationen an.

Durch einen zweckmäßigen Versatz der Referenzpunkte der Schneidkanten der mehreren Schneidkörper um ein Vielfaches des Winkelwerts kann vermieden werden, dass zwei Referenzpunkte an derselben Winkelposition zu liegen kommen. Die Goldene Zahl Φ ist eine irrationale Zahl. Sie lässt sich nicht als Bruch zweier ganzer Zahlen darstellen. Die Goldene Zahl Φ wird auch die "irrationalste" aller Zahlen genannt, weil sie sich besonders schlecht durch rationale Zahlen approximieren lässt.

Die Referenzpunkte der Schneidkanten der mehreren Schneidkörper sind durch die vorteilhafte Kombination der Winkelabstände aus dem Bereich um den Goldenen Winkel herum mit der Beabstandung der Referenzpunkte zueinander in Richtung senkrecht zur Drehrichtung besonders gleichmäßig über die Oberfläche des Grundkörpers des Bearbeitungswerkzeugs verteilt. Dies hat insbesondere zur Folge, dass bei der Bearbeitung eines Werkstücks mit dem erfindungsgemäßen Bearbeitungswerkzeug zwischen zwei aufeinanderfolgenden Eingriffen von Schneidkanten der mehreren Schneidkörper mit in Drehrichtung unmittelbar benachbarten Referenzpunkten in das Werkstück keine großen Pausen oder Abstände auf dem Werkstück liegen. Bei einem Bearbeitungswerkzeug nach dem Stand der Technik treten zwischen den durch mehrere Schneidkanten gebildeten Schneidlinien auf der Umfangsfläche des Bearbeitungswerkzeugs große Winkelbereiche ohne Schneidkante bzw. ohne Referenzpunkt auf. Diese großen Winkelbereiche ohne Schneidkante bzw. ohne Referenzpunkt sind nachteilig hinsichtlich der Erzeugung von Vibrationen. Bei der erfindungsgemäßen gleichmäßigen umfänglichen Verteilung der Referenzpunkte und der Schneidkanten sind größere Winkelabschnitte ohne Schneidkante und ohne Referenzpunkt vermieden. Dadurch ist die Erzeugung von Schwingungen weitestgehend unterdrückt. Dies bewirkt, dass sich bei der Bearbeitung eines Werkstücks mit dem erfindungsgemäßen Bearbeitungswerkzeug nur in sehr geringem Maß durch Vibrationen bewirkte Bearbeitungsspuren auf dem Werkstück abzeichnen.

Bei Bearbeitungswerkzeugen nach dem Stand der Technik sind in Drehrichtung des Bearbeitungswerkzeugs Schneidkanten mit unmittelbar benachbarten Referenzpunkten einer Schneidlinie in regelmäßigen, kurzen Abständen zueinander angeordnet. Dies bewirkt bei der Bearbeitung eines Werkstücks mit dem konventionellen Bearbeitungswerkzeug die Erzeugung eines Tons mit einer relativ hohen Frequenz, der als dominant wahrgenommen wird. Beim erfindungsgemäßen Bearbeitungswerkzeug sind die Winkelabstände von in Richtung senkrecht zur Drehrichtung unmittelbar benachbarten Referenzpunkte sehr viel größer als im Stand der Technik. Dadurch, dass die Winkelabstände insbesondere im Bereich des Goldenen Winkels liegen, wird die vom Bearbeitungswerkzeug bei der Bearbeitung eines Werkstücks erzeugte Frequenz reduziert. Töne niedrigerer Frequenz werden vom menschlichen Gehör leiser als Töne höherer Frequenz wahrgenommen. Deshalb wird das Bearbeitungswerkzeug leiser wahrgenommen als ein Bearbeitungswerkzeug nach dem Stand der Technik.

Es hat sich gezeigt, dass das erfindungsgemäße Bearbeitungswerkzeug für den gleichem Spanabtrag weniger Energie verbraucht als ein vergleichbares Bearbeitungswerkzeug nach dem Stand der Technik.

Vorteilhaft liegen die Winkelwerte, deren ganzzahlige Vielfache den Winkelabständen entsprechen, in einem Winkelbereich von +/- 1° bezüglich des Goldenen Winkels. Dies bedeutet, dass der erste Grenzwert, von dem aus sich der Winkelbereich erstreckt, der Differenz des Betrags des Goldenen Winkels und 1° entspricht, und dass der zweite Grenzwert, bis zu dem sich der Winkelbereich erstreckt, der Summe aus dem Betrag des Goldenen Winkels und 1° entspricht. Der Goldene Winkel selbst ist von diesem Winkelbereich umfasst. Die Grenzwerte zählen zu dem Winkelbereich dazu.

Bevorzugt liegen die Winkelwerte in einem Winkelbereich von +/- 0,5° bezüglich des Goldenen Winkels. Der Winkelbereich erstreckt sich vom ersten Grenzwert, nämlich der Differenz aus dem Betrag des Goldenen Winkels und 0,5° bis zu dem zweiten Grenzwert, nämlich der Summe aus dem Betrag des Goldenen Winkels von 0,5°. Auch dieser Winkelbereich umfasst den Goldenen Winkel. Die Grenzwerte zählen zu dem Winkelbereich dazu.

Vorteilhaft sind die Winkelwerte für alle Winkelabstände zwischen in Richtung senkrecht zur Drehrichtung unmittelbar benachbarten Referenzpunkten der Schneidkanten der mehreren Schneidkörper gleich groß. Es wird nur ein einziger Winkelwert aus dem Winkelbereich zur Bestimmung der Winkelabstände verwendet.

Insbesondere entsprechen die Winkelabstände zwischen in Richtung senkrecht zur Drehrichtung unmittelbar benachbarten Referenzpunkten der Schneidkanten der mehreren Schneidkörper dem Einfachen der Winkelwerte aus dem Winkelbereich.

Insbesondere sind die mehreren Schneidkörper austauschbar am Grundkörper befestigt. Alternativ können die mehreren Schneidkörper unlösbar am Grundkörper befestigt sein. Beispielsweise können die mehreren Schneidkörper durch eine Lötverbindung am Grundkörper befestigt sein. Es kann aber auch vorgesehen sein, dass die Schneidkörper integral mit dem Grundkörper ausgebildet sind. Insbesondere sind die Schneidkörper materialeinheitlich mit dem Grundkörper ausgebildet. Vorteilhaft sind die Schneidkanten integral mit den Schneidkörpern ausgebildet.

Der Grundkörper des Bearbeitungswerkzeugs weist bezüglich der Drehachse eine Umfangsfläche auf. Die Umfangsfläche läuft um die Drehachse um. Die Umfangsfläche erstreckt sich in der vorgesehenen Drehrichtung des Bearbeitungswerkzeugs. Die Umfangsfläche umschließt die Drehachse. Der Grundkörper ist in Richtung der Drehachse durch eine Stirnfläche begrenzt. Zweckmäßig sind die mehreren Schneidkörper an der Umfangsfläche des Bearbeitungswerkzeugs angeordnet. Es kann vorgesehen sein, dass die mehreren Schneidkörper ausschließlich an der Umfangsfläche des Grundkörpers des Bearbeitungswerkzeugs angeordnet sind. Insbesondere sind die mehreren Schneidkörper an der Stirnfläche des Grundkörpers des Bearbeitungswerkzeugs angeordnet. Es kann vorgesehen sein, dass die mehreren Schneidkörper ausschließlich an der Stirnfläche des Grundkörpers des Bearbeitungswerkzeugs angeordnet sind. Es kann aber auch vorgesehen sein, dass die mehreren Schneidkörper sowohl an der Umfangsfläche des Grundkörpers des Bearbeitungswerkzeugs als auch an der Stirnfläche des Grundkörpers des Bearbeitungswerkzeugs angeordnet sind.

Insbesondere sind die in Richtung senkrecht zur Drehrichtung unmittelbar benachbarten Referenzpunkte der mehreren Schneidkörper in einem in Richtung der Drehachse gemessenen Axialabstand zueinander angeordnet. Insbesondere sind die Referenzpunkte von in Richtung der Drehachse benachbarten Schneidkanten im Axialabstand zueinander angeordnet, wenn die zu den Referenzpunkten zugehörigen Schneidkörper an der Umfangsfläche des Grundkörpers angeordnet sind.

Insbesondere sind die in Richtung senkrecht zur Drehrichtung unmittelbar benachbarten Referenzpunkte in einem Radialbereichsabstand zueinander angeordnet. Der Radialbereichsabstand entspricht der Differenz des größeren Radialabstands und des kleineren Radialabstands der radial unmittelbar benachbarten Referenzpunkte. Ein Radialabstand ist der Abstand zwischen einem Referenzpunkt und der Drehachse. Die mehreren Schneidkörper können so angeordnet sein, dass sich zwischen ihren Referenzpunkten ein Kreisringbereich anordnen lässt, dessen Mittelpunkt auf der Drehachse liegt. Der Kreisringbereich weist eine radial zur Drehachse gemessene radiale Breite auf. Radial unmittelbar zueinander benachbarte Referenzpunkte der Schneidkanten der mehreren Schneidkörper sind Referenzpunkte zwischen denen der Kreisringbereich mit der kleinsten radialen Breite im Hinblick auf einen betrachteten Referenzpunkt liegt.

Bei der Ermittlung des Kreisringbereichs mit der kleinsten radialen Breite sind radiale Breiten mit einem Wert von Null ausgeschlossen. Es können mehrere Gruppen von mehreren Schneidkörpern am Grundkörper angeordnet sein, die jeweils für sich genommen die im Zusammenhang mit den mehreren Schneidkörpern beschriebenen Eigenschaften aufweisen.

Insbesondere sind radial benachbarte Referenzpunkte im Radialbereichsabstand zueinander angeordnet, wenn die zugeordneten Schneidkanten der mehreren Schneidkörper an der Stirnfläche des Grundkörpers des Bearbeitungswerkzeugs angeordnet sind. Bevorzugt sind die Axialabstände zwischen allen unmittelbar benachbarten Referenzpunkten der mehreren Schneidkörper und/oder die Radialbereichsabstände zwischen allen unmittelbar benachbarten Referenzpunkten gleich groß.

Es kann auch vorgesehen sein, dass sowohl Referenzpunkte von in Richtung der Drehachse benachbarten Schneidkanten im Axialabstand zueinander angeordnet sind als auch, dass radial benachbarte Referenzpunkte im Radialbereichsabstand zueinander angeordnet sind. In besonderer Ausgestaltung der Erfindung können Referenzpunkte sowohl in Richtung der Drehachse als auch in Richtung radial zur Drehachse unmittelbar benachbart sein. Dies kann beispielsweise dann der Fall sein, wenn die Umfangsfläche des Grundkörpers zumindest teilweise im Wesentlichen der Fläche eines Kegels entspricht. Ein weiteres Beispiel hierfür ist ein Konturfräser, dessen Umfangsfläche eine unregelmäßige Kontur aufweisen kann.

Insbesondere weisen die Schneidkanten der mehreren Schneidkörper in Richtung der Drehachse gemessene Axialbreiten auf. Es kann auch vorgesehen sein, dass die Schneidkanten der mehreren Schneidkörper keine in Richtung der Drehachse gemessenen technisch relevanten Axialbreiten aufweisen.

Insbesondere weisen die Schneidkanten der mehreren Schneidkörper in Richtung radial zur Drehachse gemessene Radialbreiten auf. Es kann auch vorgesehen sein, dass die Schneidkanten der mehreren Schneidkörper keine in Richtung radial zur Drehachse gemessenen technisch relevanten Radialbreiten aufweisen.

Es kann auch vorgesehen sein, dass die Schneidkanten der mehreren Schneidkörper sowohl in Richtung der Drehachse gemessene Axialbreiten als auch in Richtung radial zur Drehachse gemessene Radialbereiten aufweisen. Insbesondere weist ein Teil der mehreren Schneidkörper Schneidkanten ausschließlich mit Radialbreite und ein anderer Teil der mehreren Schneidkörper Schneidkanten ausschließlich mit Axialbreite auf. Dies kann insbesondere dann der Fall sein, wenn ein Teil der mehreren Schneidkörper an der Stirnfläche des Grundkörpers und ein anderer Teil der mehreren Schneidkörper an der Umfangsfläche des Grundkörpers angeordnet sind.

In besonderer Ausgestaltung der Erfindung kann vorgesehen sein, dass dieselbe Schneidkante sowohl eine Axialbreite als auch eine Radialbreite aufweist. Dies kann insbesondere dann der Fall sein, wenn die Umfangsfläche des Grundkörpers des Bearbeitungswerkzeugs zumindest teilweise der Form der Mantelfläche eines Kegels entspricht. Ein weiteres Beispiel hierfür ist ein Konturfräser, dessen Umfangsfläche eine unregelmäßige Kontur aufweisen kann.

In vorteilhafter Ausgestaltung der Erfindung ist vorgesehen, dass der Axialabstand von 1% bis 50%, insbesondere von 8% bis 50%, insbesondere von 8% bis 35%, insbesondere von 10% bis 35% insbesondere von 10% bis 30%, der größten Axialbreite der Schneidkanten der mehreren Schneidkörper, insbesondere des Mittelwerts aller Axialbreiten der Schneidkanten der mehreren Schneidkörper beträgt. Zweckmäßig beträgt der Radialbereichsabstand von 1% bis 50%, insbesondere von 8% bis 50%, insbesondere von 8% bis 35%, insbesondere von 10% bis 35% insbesondere von 10% bis 30% der größten Radialbreite der Schneidkanten der mehreren Schneidkörper, insbesondere des Mittelwerts aller Radialbreiten der Schneidkanten der mehreren Schneidkörper. Es kann auch vorgesehen sein, dass die mehreren Schneidkörper mit Referenzpunkten mit einem Axialabstand zueinander und Schneidkörper mit Referenzpunkten mit einem Radialbereichsabstand zueinander umfassen, wobei zumindest ein Axialabstand in einem der vorstehend angegebenen Verhältnisse zu der größten Axialbreite, insbesondere zum Mittelwert aller Axialbreiten der mehreren Schneidkörper steht und wobei zumindest ein Radialbereichsabstand in einem der vorstehend angegebenen Verhältnisse zu der größten Radialbreite, insbesondere zum Mittelwert aller Radialbreiten der mehreren Schneidkörper steht. Durch eine entsprechende Wahl des Axialabstands bzw. des Radialbereichsabstands kann der Überlappungsgrad von in Richtung senkrecht zur Drehrichtung unmittelbar benachbarten Schneidkanten bestimmt werden. Durch diese Wahl kann auch die Zahnzahl - also die Anzahl von bezüglich der Drehrichtung hintereinanderliegenden Schneidkanten - beeinflusst werden.

Bevorzugt sind die Axialbreiten der Schneidkanten aller der mehreren Schneidkörper gleich groß. Bevorzugt sind die Axialbreiten der Schneidkanten aller der mehreren Schneidkörper, die an der Umfangsfläche des Grundkörpers des Bearbeitungswerkzeugs angeordnet sind, gleich groß. Bevorzugt sind die Radialbreiten der Schneidkanten aller der mehreren Schneidkörper gleich groß. Bevorzugt sind die Radialbreiten der Schneidkanten aller Schneidkörper, die an der Stirnfläche des Grundkörpers des Bearbeitungswerkzeugs angeordnet sind, gleich groß.

In vorteilhafter Weiterbildung der Erfindung sind die Axialbreiten der Schneidkanten der mehreren Schneidkörper unterschiedlich groß. Insbesondere sind die Radialbreiten der Schneidkanten der mehreren Schneidkörper unterschiedlich groß. Es kann vorgesehen sein, dass die Axialbreiten eines Teils der Schneidkanten der mehreren Schneidkörper unterschiedlich groß sind, und dass die Radialbreiten des anderen Teils der Schneidkanten der mehreren Schneidkörper unterschiedlich groß sind. In Kombination mit einem konstanten Axialabstand und/oder einem konstanten Radialbereichsabstand kann durch die unterschiedliche Größe der Axialbreiten und/oder die unterschiedliche Größe der Radialbreiten lokal eine gewünschte Zahnzahl gezielt eingestellt werden. Durch diese Kombination lässt sich die Breite eines Überlappungsbereichs von Schneidkanten mit in Drehrichtung der Drehachse unmittelbar benachbarten Referenzpunkten einstellen. Die Zahnzahl entspricht bei Bearbeitungswerkzeugen mit konstanten Axialabständen und konstanten Axialbreiten dem Quotienten aus Axialbreite und Axialabstand. Durch die Variation der Axialbreiten kann die Zahnzahl bei konstantem Axialabstand lokal verändert werden. Entsprechend lässt sich bei Bearbeitungswerkzeugen mit konstanten Radialbreiten und konstanten Radialabständen aus dem Quotienten von Radialbreite und Radialabstand die Zahnzahl berechnen. Durch eine Variation der Radialbreiten kann auch hier die Zahnzahl bei konstantem Radialabstand lokal verändert werden. Auf diese Weise kann an ausgesuchten Stellen des Grundkörpers des Bearbeitungswerkzeugs die effektive Schneidenzahl erhöht werden. Dies ist beispielsweise für die Bearbeitung von Deckschichten vorteilhaft, an denen eine erhöhte Zahnzahl erwünscht ist. In analoger Weise kann an ausgesuchten Stellen des Grundkörpers des Bearbeitungswerkzeugs die effektive Schneidenzahl auch reduziert werden.

In vorteilhafter Weiterbildung der Erfindung weist die Schneidenträgerfläche einen sich bezüglich der Richtung senkrecht zur Drehachse genau über die gesamte Anfangsschneidkante und/oder genau über die gesamte Endschneidkante erstreckenden, und in Drehrichtung vollständig um die Drehachse umlaufenden Randbereich auf. Dieser Randbereich wird auch als in Drehrichtung hinter der Anfangsschneidkante und/oder hinter der Endschneidkante liegend bezeichnet. Insbesondere ist in dem Randbereich zusätzlich zu den mehreren Schneidkörpern mindestens ein weiterer Schneidkörper angeordnet, der nicht zu den mehreren Schneidkörpern gehört. Es kann vorgesehen sein, dass der Grundkörper des Bearbeitungswerkzeugs in Richtung der Drehachse und/oder in Richtung radial zur Drehachse den Randbereich aufweist, und dass am Grundkörper im Randbereich zusätzlich zu den mehreren Schneidkörpern der mindestens eine weiterer Schneidkörper angeordnet ist und/oder dass die Axialbreite und/oder die Radialbreite mindestens einer der Schneidkanten der mehreren Schneidkörper in dem Randbereich größer oder kleiner ist als diejenige einer Schneidkante eines Schneidkörpers der mehreren Schneidkörper außerhalb des Randbereichs. Insbesondere ist die Axialbreite und/oder die Radialbreite zumindest der Anfangsschneidkante und/oder zumindest der Endschneidkante größer oder kleiner als diejenige einer Schneidkante eines Schneidkörpers der mehreren Schneidkörper außerhalb des Randbereichs.

Dadurch kann über die gesamte Ausdehnung des Grundkörpers in Richtung senkrecht zur Drehrichtung eine möglichst gleichmäßige Zahnzahl erreicht werden.

Vorteilhaft sind die Axialabstände aller in Richtung der Drehachse unmittelbar benachbarter Referenzpunkte der Schneidkanten der mehreren Schneidkörper gleich groß. Vorteilhaft sind die Radialbereichsabstände aller in Richtung radial zur Drehachse unmittelbar benachbarter Referenzpunkte der Schneidkanten der mehreren Schneidkörper gleich groß. Es kann auch vorgesehen sein, dass sowohl die Axialabstände aller in Richtung der Drehachse unmittelbar benachbarter Referenzpunkte der Schneidkanten der mehreren Schneidkörper gleich groß sind als auch, dass die Radialbereichsabstände aller in Richtung der Drehachse unmittelbar benachbarter Referenzpunkte der Schneidkanten der mehreren Schneidkörper gleich groß sind.

Insbesondere sind die in Richtung senkrecht zur Drehrichtung gemessenen Abstände zwischen in Richtung senkrecht zur Drehrichtung unmittelbar benachbarten Referenzpunkten der mehreren Schneidkörper unterschiedlich groß. Zweckmäßig sind die Axialabstände zwischen in Richtung der Drehachse unmittelbar benachbarten Referenzpunkten der mehreren Schneidkörper unterschiedlich groß. Insbesondere sind die Radialbereichsabständen zwischen in Richtung radial zur Drehachse unmittelbar benachbarten Referenzpunkten der mehreren Schneidkörper unterschiedlich groß. Insbesondere kann auch vorgesehen sein, dass sowohl die Axialabstände zwischen in Richtung der Drehachse unmittelbar benachbarten Referenzpunkten der mehreren Schneidkörper unterschiedlich groß sind als auch, dass die Radialbereichsabstände in Richtung radial zur Drehachse unmittelbar benachbarter Referenzpunkte der mehreren Schneidkörper unterschiedlich groß sind. In Kombination mit konstanten Axialbreiten bzw. konstanten Radialbreiten lässt sich auch auf diese Weise eine lokale Variation der Zahnzahl bewirken.

In vorteilhafter Weiterbildung der Erfindung weist der Referenzpunkt einer aus den mehreren Schneidkörpern beliebig ausgewählten Referenzschneidkante zu den Referenzpunkten der Schneidkanten aller anderen mehreren Schneidkörper, insbesondere zu den Referenzpunkten der Schneidkanten sämtlicher Schneidkörper des Bearbeitungswerkzeugs Winkelabstände auf, die je einem ganzzahligen Vielfachen eines einzigen Winkelwerts aus dem Winkelbereich entsprechen. In anderen Worten entsprechen sämtliche Winkelabstände zwischen allen Referenzpunkten der mehreren Schneidkörper, bzw. zwischen allen Referenzpunkten sämtlicher Schneidkörper des Bearbeitungsgeräts einem ganzzahligen Vielfachen eines einzigen Winkelwerts aus dem Winkelbereich. Insbesondere weist das Bearbeitungswerkzeug keinen Schneidkörper mit einer Schneidkante und einem Referenzpunkt auf, der zu einem anderen Schneidkörper des Bearbeitungswerkzeugs in einem Winkelabstand angeordnet ist, der nicht einem Vielfachen des einzigen Winkelwerts entspricht. Dadurch sind die Referenzpunkte sämtlicher Schneidkanten bezüglich der Drehrichtung des Bearbeitungswerkzeugs gemäß dem Goldenen Schnitt nach Fibonacci verteilt. Dadurch ergibt sich eine ideale Verteilung über die Oberfläche des Grundkörpers. Es ergibt sich ein besonders gleichmäßiges Schnittbild. Die Bearbeitung des Bearbeitungswerkzeugs erfolgt besonders vibrationsarm, besonders geräuscharm und besonders schnell.

Insbesondere besitzt die Umfangsfläche des Grundkörpers im Wesentlichen die Form einer Mantelfläche eines Zylinders. Dies bedeutet, dass sich um den Grundkörper ohne darauf angeordnete Schneidkörper eine Einhüllende legen lässt, die die Form einer Mantelfläche eines Zylinders besitzt. Diese Einhüllende kann eventuelle Aussparungen zur Aufnahme der Schneidkörper abdecken. Durch die Aussparungen weicht die tatsächliche Form der Umfangsfläche von der Form einer Mantelfläche eines Zylinders ab. Dennoch entspricht die Umfangsfläche im Wesentlichen der Form der Mantelfläche eines Zylinders.

In vorteilhafter Weiterbildung der Erfindung ist vorgesehen, dass die Schneidkanten der mehreren Schneidkörper jeweils in Ansicht in Richtung radial zur Drehachse auf den Referenzpunkt einer Schneidkante gegenüber der Drehachse um einen Achswinkel verkippt sind. Bei ungeraden Schneidkanten ist die Verkippung anhand einer Tangente an die jeweilige Schneidkante durch den Referenzpunkt gemessen. Insbesondere verläuft die Tangente in Richtung senkrecht zur Richtung radial zur Drehachse. Der Achswinkel liegt zwischen -90° und +90°. Der Achswinkel ist der kleinere der beiden Winkel zwischen der Schneidkante und einer Ebene senkrecht zur Drehrichtung durch den Referenzpunkt. Der positive Achswinkel ist in Ansicht auf die Außenseite der Schneidenträgerfläche gegen den Uhrzeigersinn gemessen. Der negative Achswinkel ist in Ansicht auf die Außenseite der Schneidenträgerfläche im Uhrzeigersinn gemessen. Es kann vorgesehen sein, dass ein Teil der Schneidkanten der mehreren Schneidkörper einen Achswinkel von größer als 0° aufweist, und dass ein anderer Teil einen Achswinkel von kleiner als 0° aufweist.

Es kann vorgesehen sein, dass mindestens eine erste Gruppe mehrerer Schneidkörper und eine zweite Gruppe mehrere Schneidkörper am Grundkörper des Bearbeitungswerkzeugs angeordnet sind. Die einer Gruppe zugeordneten mehreren Schneidkörper können jeweils für sich genommen sämtliche oder auch nur einige der vorstehend beschriebenen Eigenschaften der mehreren Schneidkörper aufweisen. Die einer Gruppe zugeordneten mehreren Schneidkörper weisen jedoch zumindest die erfindungsgemäßen Eigenschaften der mehreren Schneidkörper auf. Insbesondere läuft eine der ersten Gruppe zugeordnete gedachte erste Helixlinie in entgegengesetztem Drehsinn zu einer der zweiten Gruppe zugeordneten zweiten Helixlinie um die Drehachse um.

Zweckmäßig überlappen sich die Schneidkanten der mehreren Schneidkörper in Richtung senkrecht zur Drehrichtung. Insbesondere überlappen sich die Schneidkanten mit in Richtung senkrecht zur Drehrichtung unmittelbar benachbarten Referenzpunkten der mehreren Schneidkörper. Insbesondere überlappen sich alle Schneidkanten der mehreren Schneidkörper mit in Richtung senkrecht zur Drehrichtung unmittelbar benachbarten Referenzpunkten. Dadurch erfolgt ein bezüglich der Richtung senkrecht zur Drehrichtung lückenloser Spanabtrag durch die Schneidkanten der mehreren Schneidkörper. Dadurch können die Spuren, die der Randbereich (bezüglich der Richtung senkrecht zur Drehrichtung) einer Schneidkante im Werkstück hinterlässt, durch eine diesen Randbereich überlappende, bezüglich der Drehrichtung nachfolgende Schneidkante verwischt werden.

Die vorstehend als fakultativ beschriebenen Merkmale können in beliebiger Weise miteinander kombiniert werden, wodurch sich weitere vorteilhafte Ausgestaltungen der Erfindung ergeben.

Ausführungsbeispiele der Erfindung werden im Folgenden anhand der Zeichnung erläutert. Es zeigen:

Fig. 1a      eine perspektivische Darstellung eines um eine Drehachse drehbaren Bearbeitungswerkzeugs mit einer die Drehachse umschließenden Umfangsseite,

Fig. 1b      eine Seitenansicht auf die Umfangsseite des Bearbeitungswerkzeugs aus Fig. 1a in Richtung radial zur Drehachse,

Fig. 2a, 2b   schematische Abwicklungsdarstellungen der Umfangsseite des Bearbeitungswerkzeugs aus den Figuren 1a und 1b, wobei die Abwicklungsdarstellung die um die Drehachse abgewickelte Außenseite in der Zeichenebene ausgebreitet mit Blick auf die Außenseite zeigt,

Fig. 2c      schematische perspektivische Darstellung der Anordnung der Schneid-kanten des Bearbeitungswerkzeugs aus den Figuren 1a und 1b auf einer gedachten Helixlinie,

Fig. 2d      schematische Seitenansicht der Anordnung der Schneidkanten des Bearbeitungswerkzeugs aus den Figuren 1a und 1b auf einer gedachten Helixlinie,

Fig. 2e      die schematischen Abwicklungsdarstellungen aus den Figuren 2a und 2b,

Fig. 3       eine schematische Stirnansicht auf ein Bearbeitungswerkzeug, bei dem die mehreren Schneidkanten auf einer gedachten Helixlinie in Form einer ebenen Spirale angeordnet sind,

Fig. 4       eine schematische Abwicklungsdarstellung einer alternativen Aus-führung eines Bearbeitungswerkzeugs mit Schneidkanten unterschied-licher Axialbreiten und

Fig. 5       eine schematische Abwicklungsdarstellung einer weiteren Aus-führungsform eines Bearbeitungswerkzeugs mit unterschiedlichen Axialabständen der Referenzpunkte von in Richtung der Drehachse unmittelbar benachbarten Schneidkanten.

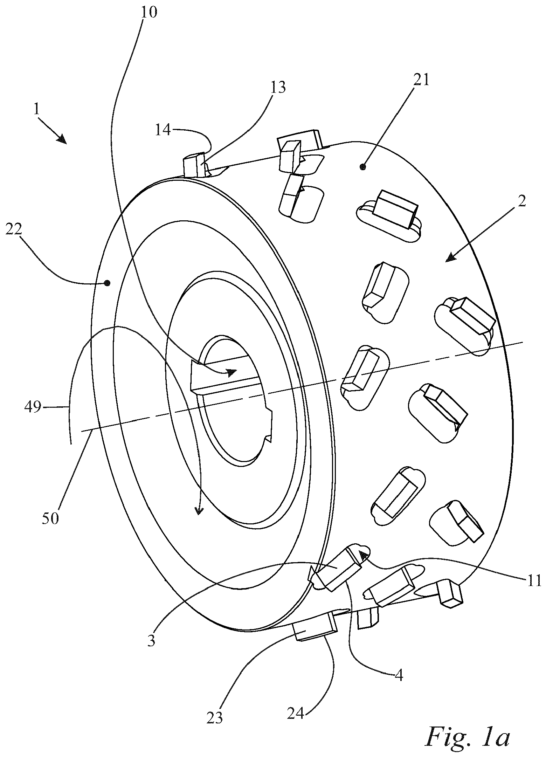

Fig. 1a zeigt ein Bearbeitungswerkzeug 1. Das Bearbeitungswerkzeug 1 ist zur zerspanenden Bearbeitung von Werkstoffen vorgesehen. Das Bearbeitungswerkzeug 1 ist in den Ausführungsbeispielen ein Fräswerkzeug, insbesondere ein Bohrungswerkzeug. Es kann sich hierbei aber auch um einen Schaftfräser, eine Hobelwelle, einen Profilfräser oder dgl. handeln. Das Bearbeitungswerkzeug 1 weist eine Drehachse 50 auf. Das Bearbeitungswerkzeug 1 ist zum drehenden Antrieb um die Drehachse 50 vorgesehen. Das Bearbeitungswerkzeug 1 weist einen Grundkörper 2 auf. Die Drehachse 50 verläuft durch den Grundkörper 2. Der Grundkörper 2 weist eine Aussparung 10 zur Aufnahme einer nicht dargestellten Antriebswelle auf. Das Bearbeitungswerkzeug 1 ist zur Montage auf der Antriebswelle ausgelegt. Im Ausführungsbeispiel nach Fig. 1a ist die Aussparung 10 eine den Grundkörper 2 vollständig durchdringende Öffnung. Die Drehachse 50 verläuft durch die durch die Aussparung 10 gebildete Öffnung. Es kann aber auch vorgesehen sein, dass die Aussparung 10 den Grundkörper 2 nicht vollständig durchdringt.

Am Grundkörper 2 sind mehrere Schneidkörper angeordnet, die in Fig. 1a exemplarisch mit dem Bezugszeichen 3, 13 und 23 gekennzeichnet sind. Diese Schneidkörper werden im Folgenden als mehrere Schneidkörper bezeichnet. Insbesondere umfassen die mehreren Schneidkörper mehr als zwei, bevorzugt mehr als drei Schneidkörper. In den Ausführungsbeispielen umfassen die mehreren Schneidkörper von 20 bis 30 Schneidkörper. Dennoch sind die mehreren Schneidkörper der Übersichtlichkeit halber lediglich mit drei Bezugszeichen angesprochen. Der Grundkörper 2 besitzt eine Schneidenträgerfläche. Die mehreren Schneidkörper 3, 13 und 23 sind auf der Schneidenträgerfläche angeordnet. Es kann vorgesehen sein, dass die mehreren Schneidkörper 3, 13, 23 lediglich eine Teilmenge aller Schneidkörper des Bearbeitungswerkzeugs bilden. In den Ausführungsbeispielen zählen sämtliche Schneidkörper des Bearbeitungswerkzeugs 1 zu den mehreren Schneidkörpern 3, 13, 23. Die mehreren Schneidkörper 3, 13, 23 werden auch als Gruppe bezeichnet.

Der Grundkörper 2 besitzt eine Umfangsfläche 21. Im Ausführungsbeispiel nach den Fig. 1a, 1b, 2a, 2b, 2c, 2d, 2e, 4 und 5 ist die Umfangsfläche 21 die Schneidenträgerfläche. Die Umfangsfläche 21 umschließt die Drehachse 50 vollständig. Der Grundkörper 2 besitzt eine Stirnfläche 22. Die Stirnfläche 22 begrenzt die Umfangsfläche 21 in Richtung der Drehachse 50. Im Ausführungsbeispiel nach Fig. 1a sind die mehreren Schneidkörper 3, 13, 23 an der Umfangsfläche 21 des Grundkörpers 2 angeordnet. Die Umfangsfläche 21 des Grundkörpers 2 besitzt im Wesentlichen die Form einer Mantelfläche eines Zylinders. Abweichend von der Form der Mantelfläche eines Zylinders weist die Umfangsfläche 21 Vertiefungen 11 auf. Die Vertiefungen 11 sind zur Aufnahme der Schneidkörper 3, 13, 23 vorgesehen. Es kann auch vorgesehen sein, dass die Schneidkörper auf der äußersten Umfangsfläche und nicht in einer Vertiefung angeordnet sind. Es kann auch vorgesehen sein, dass die Schneidkörper auf einer Erhebung der Umfangsfläche angeordnet sind. Im Ausführungsbeispiel nach Fig. 1a sind die mehreren Schneidkörper 3, 13, 23 ausschließlich an der Umfangsfläche 21 angeordnet.

Die Schneidkörper 3, 13, 23 sind als separate Bauteile am Grundkörper 2 befestigt. Die Schneidkörper 3, 13, 23 sind am Grundkörper angelötet. Es kann auch vorgesehen sein, dass die Schneidkörper lösbar am Grundkörper befestigt sind. Es kann aber auch vorgesehen sein, dass die Schneidkörper integral und materialeinheitlich mit dem Grundkörper ausgebildet sind.

Im Betrieb dreht sich das Bearbeitungswerkzeug 1 um die Drehachse 50 in einer Drehrichtung 49. Die Drehrichtung 49 läuft kreisförmig um die Drehachse 50 um. Die Drehrichtung 49 wird auch als Umfangsrichtung des Bearbeitungswerkzeugs 1 bezeichnet. Während der zerspanenden Bearbeitung mit dem Bearbeitungswerkzeug 1 drehen sich den mehreren Schneidkörpern 3, 13, 23 zugeordnete Schneidkanten 4, 14, 24 in der Drehrichtung 49.

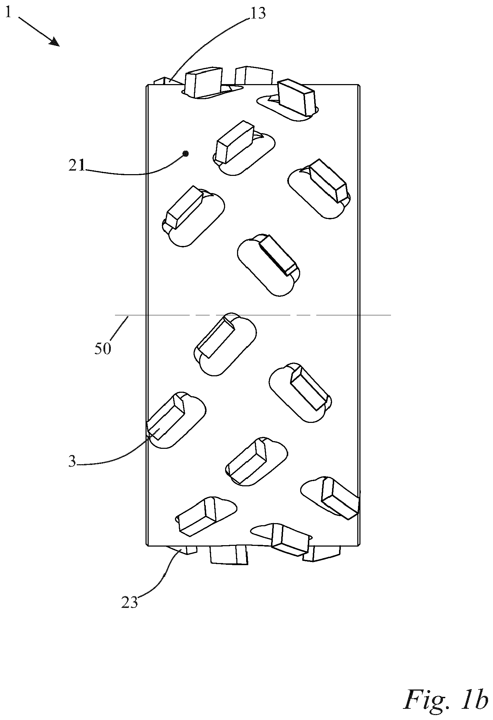

Fig. 1b zeigt eine Seitenansicht auf das Bearbeitungswerkzeug 1 aus Fig. 1a in Richtung radial zur Drehachse 50.

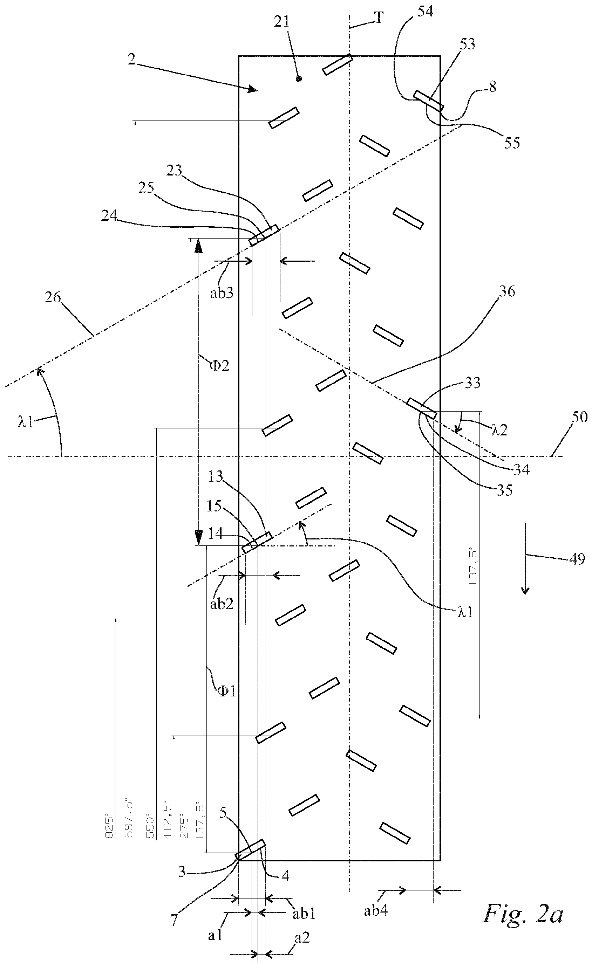

Fig. 2a zeigt eine schematische Abwicklungsdarstellung der Umfangsfläche 21 aus den Figuren 1a und 1b. Die Umfangsfläche 21 ist um die Drehachse 50 in der Zeichenebene abgewickelt. Fig. 2a zeigt die Abwicklungsdarstellung in Ansicht auf die Außenseite der Umfangsfläche 21. Die mehreren Schneidkörper 3, 13, 23 sind schematisch dargestellt. Jeder der mehreren Schneidkörper 3, 13, 23 weist je eine Schneidkante 4, 14, 24 auf. Der erste Schneidkörper 3 weist die erste Schneidkante 4 auf. Der zweite Schneidkörper 13 weist die zweite Schneidkante 14 auf. Der dritte Schneidkörper 23 weist die dritte Schneidkante 24 auf. Die Schneidkanten 4, 14, 24 sind bezüglich der Drehrichtung 49 vorne an dem ihnen zugeordneten Schneidkörper 3, 13, 23 angeordnet.

Jede Schneidkante 4, 14, 24 der mehreren Schneidkörper 3, 13, 23 weist einen Referenzpunkt 5, 15, 25 auf. Die erste Schneidkante 4 weist den ersten Referenzpunkt 5 auf. Die zweite Schneidkante 14 weist den zweiten Referenzpunkt 15 auf. Die dritte Schneidkante 24 weist den dritten Referenzpunkt 25 auf. Der Referenzpunkt 5, 15, 25 ist ein definierter Punkt auf der zugeordneten Schneidkante 4, 14, 24. Die verschiedenen Referenzpunkte 5, 15, 25 sind auf den ihnen jeweils zugeordneten Schneidkanten 4, 14, 24 jeweils gleich positioniert. Beispielsweise kann es sich bei den Referenzpunkten jeweils um die vorlaufende Schneidkantenecke handeln. In den Ausführungsbeispielen ist der Referenzpunkt 5, 15, 25 der Mittelpunkt der zugeordneten Schneidkante 4, 14, 24 bezüglich der Richtung senkrecht zur Drehrichtung 49, insbesondere bezüglich der Richtung der Drehachse 50 und/oder der Richtung radial zur Drehachse 50. Der Referenzpunkt ist auf jeder Schneidkante an derselben, ausgezeichneten Stelle angeordnet. Die Stellen, auf denen die Referenzpunkte angeordnet sind, besitzen dieselben Eigenschaften für jede Schneidkante der mehreren Schneidkörper 3, 13, 23.

Die Referenzpunkte 5, 15, 25 sind in Richtung senkrecht zur Drehrichtung 49 zueinander beabstandet. Im Ausführungsbeispiel nach Fig. 2a weist der erste Referenzpunkt 5 zum zweiten Referenzpunkt 15 den ersten Axialabstand a1 auf. Der zweite Referenzpunkt 15 weist zum dritten Referenzpunkt 25 den zweiten Axialabstand a2 auf. In den Ausführungsbeispielen sind die Referenzpunkte 5, 15, 25 bezüglich der Drehachse 50 zueinander beabstandet. Dementsprechend sind die Axialabstände a1, a2 in Richtung der Drehachse 50 gemessen.

Der erste Referenzpunkt 5, der dem ersten Schneidkörper 3 zugeordnet ist, ist bezüglich der Richtung der Drehachse 50 unmittelbar benachbart zu dem zweiten Referenzpunkt 15, der dem zweiten Schneidkörper 13 zugeordnet ist. Unmittelbar benachbart sind Referenzpunkte der mehreren Schneidkörper 3, 13, 23 dann, wenn gedachte Ebenen senkrecht zur Drehachse 50 und durch die zugehörigen Referenzpunkte 5, 15, 25 unmittelbar benachbart sind. Es ist nicht ausgeschlossen, dass zwischen zwei unmittelbar benachbarten Referenzpunkten von Schneidkanten der mehreren Schneidkörper ein Referenzpunkt von einer Schneidkante liegen kann, der nicht zu den mehreren Schneidkörpern gehört, also nicht die Eigenschaften der mehreren Schneidkörper aufweist. Der zweite Referenzpunkt 15 ist bezüglich der Richtung der Drehachse 50 unmittelbar benachbart zu dem dritten Referenzpunkt 25, der dem dritten Schneidkörper 23 zugeordnet ist.

Bezüglich der Richtung der Drehachse 50 unmittelbar benachbarte Referenzpunkte 5, 15, 25 der mehreren Schneidkörper 3, 13, 23 sind im Axialabstand a1, a2 zueinander angeordnet.

In den Ausführungsbeispielen (beispielsweise Fig. 2a) überlappen sich die Schneidkanten 4, 14, 24 der mehreren Schneidkörper 3, 13, 23 bezüglich der Richtung senkrecht zur Drehrichtung 49, insbesondere bezüglich der Richtung der Drehachse 50. Für sich überlappende Schneidkanten existiert eine gedachte Ebene senkrecht zur Richtung der Drehrichtung 49, in den Ausführungsbeispielen senkrecht zur Drehachse 50, die die beiden sich überlappenden Schneidkanten schneidet.

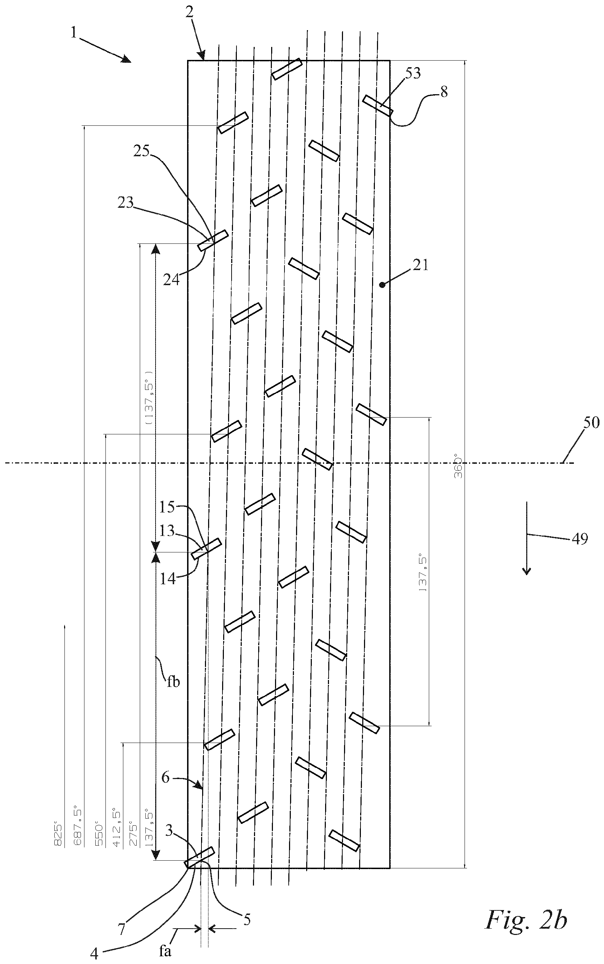

Die Schneidkanten 4, 14, 24 der mehreren Schneidkörper 5, 15, 25 überlappen sich bezüglich der Richtung senkrecht zur Drehrichtung 49, insbesondere bezüglich der Richtung der Drehachse lückenlos und bilden so eine Gesamtschneide. Die Gesamtschneide weist einen ersten Endpunkt 7 und einen zweiten Endpunkt 8 auf. Der erste Endpunkt 7 und der zweite Endpunkt 8 begrenzen die Gesamtschneide an ihren gegenüberliegenden Längsenden. Der erste Endpunkt 7 und der zweite Endpunkt 8 begrenzen die Gesamtschneide bezüglich der Richtung senkrecht zur Drehrichtung 49. In den Ausführungsbeispielen zählen alle Schneidkörper des Bearbeitungswerkzeugs 1 zu den mehreren Schneidkörpern 5, 15, 25. Es können aber auch Schneidkörper vorgesehen sein, die nicht zu den mehreren Schneidkörpern zählen, beispielsweise weil sie nicht in dem entsprechenden Winkelabstand zu den anderen Schneidkörpern angeordnet sind. In jedem Fall sind die Schneidkanten aller Schneidkörper des Bearbeitungswerkzeugs 1 zwischen dem ersten Endpunkt 7 und dem zweiten Endpunkt 8 der Gesamtschneide angeordnet. Im Ausführungsbeispiel nach den Figuren 2a und 2b verläuft durch den ersten Endpunkt 7 eine erste gedachte Begrenzungsebene und durch den zweiten Endpunkt 8 eine zweite gedachte Begrenzungsebene. Die erste Begrenzungsebene und die zweite Begrenzungsebene verlaufen jeweils senkrecht zur Drehachse 50. Die Schneidkanten aller Schneidkörper des Bearbeitungswerkzeugs 1 sind zwischen der ersten Begrenzungsebene und der zweiten Begrenzungsebene angeordnet.

Dem ersten Endpunkt 7 ist ein Anfangsschneidkörper zugeordnet. Im Ausführungsbeispiel nach den Figuren 2a und 2b ist der Anfangsschneidkörper der erste Schneidkörper 3. Dem zweiten Endpunkt 8 ist ein Endschneidkörper 53 zugeordnet.

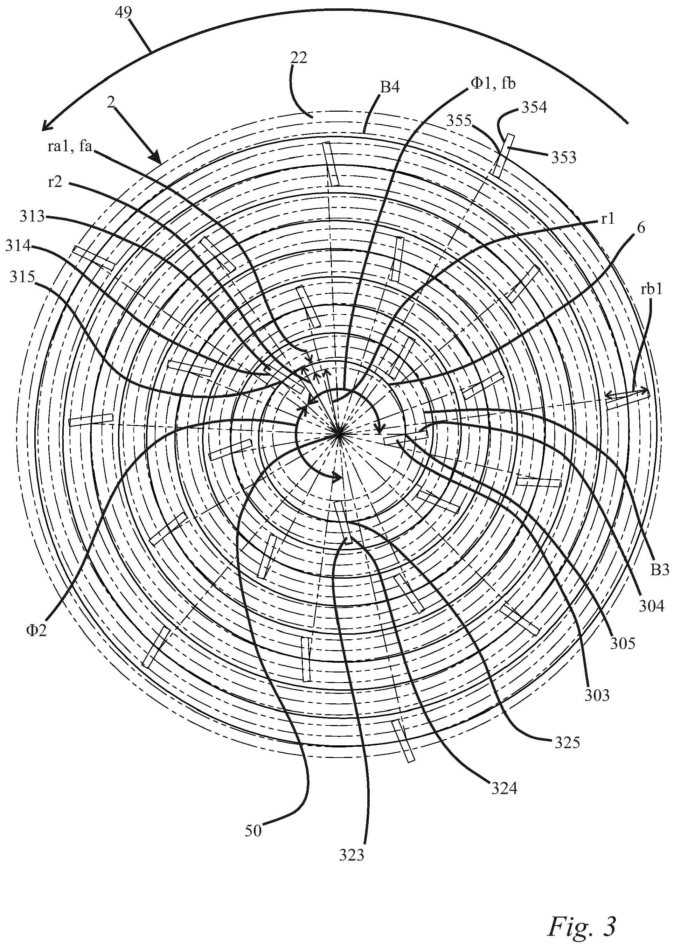

Die Schneidkanten 4, 14, 24 der mehreren Schneidkörper 3, 13, 23 der Gesamtschneide überlappen sich bezüglich der Richtung senkrecht zur Drehrichtung 49, in den Ausführungsbeispielen bezüglich der Richtung der Drehachse 50 (Figuren 1a, 1b, 2a, 2b, 2c, 2d, 2e, 4, 5) oder bezüglich der Richtung radial zur Drehachse 50 (Fig. 3), jeweils nur teilweise. Es kann auch vorgesehen sein, dass sich die Schneidkanten 4, 14, 24 der mehreren Schneidkörper 3, 13, 23 der Gesamtschneide bezüglich der Richtung der Drehachse 50 und bezüglich der Richtung radial zur Drehachse 50 jeweils nur teilweise überlappen.

Die Schneidkanten 4, 14, 24 besitzen eine senkrecht zur Drehrichtung 49 gemessene Breite. Im Ausführungsbeispiel nach Fig. 2a sind die Breiten aller der mehreren Schneidkanten 4, 14, 24 gleich groß. Die Breiten erstrecken sich in Richtung der Drehachse 50 und werden als Axialbreiten ab1, ab2, ab3 bezeichnet. Die Axialbreiten ab1, ab2, ab3 sind in Richtung der Drehachse 50 gemessen. Die erste Axialbreite ab1 ist die Breite der ersten Schneidkante 4. Die zweite Axialbreite ab2 ist die Breite der zweiten Schneidkante 14. Die dritte Axialbreite ab3 ist die Breite der dritten Schneidkante 24.

Der erste Axialabstand a1 zwischen dem ersten Referenzpunkt 5 und dem zweiten Referenzpunkt 15 beträgt von 1% bis 100%, insbesondere von 8% bis 100%, insbesondere von 8% bis 55%, insbesondere von 1% bis 50%, insbesondere von 8% bis 50%, insbesondere von 8% bis 35%, insbesondere von 10% bis 35%, im Ausführungsbeispiel von 10% bis 30% der größten Axialbreite ab3, bzw. ab1 oder ab2 der Schneidkanten 4, 14, 24 der mehreren Schneidkörper 3, 13, 23.

Der erste Axialabstand a1 zwischen dem ersten Referenzpunkt 5 und dem zweiten Referenzpunkt 15 beträgt von 1% bis 100%, insbesondere von 8% bis 100%, insbesondere von 8% bis 55%, insbesondere von 1% bis 50%, insbesondere von 8% bis 50%, insbesondere von 8% bis 35%, insbesondere von 10% bis 35%, im Ausführungsbeispiel von 10% bis 30% des Mittelwerts der Axialbreiten ab1, ab2, ab3 aller Schneidkanten 4, 14, 24 der mehreren Schneidkörper 3, 13, 23.

Im Ausführungsbeispiel nach Fig. 2a sind sämtliche Axialbreiten ab1, ab2, ab3 der Schneidkanten 4, 14, 24 aller der mehreren Schneidkörper 3, 13, 23 gleich groß. Die Axialabstände a1, a2 sind zwischen allen in Richtung senkrecht zur Drehrichtung 49, im Ausführungsbeispiel in Richtung der Drehachse 50, unmittelbar benachbarten Referenzpunkten 5, 15, 25 der mehreren Schneidkörper 3, 13, 23 gleich groß. Dementsprechend gelten die angeführten Verhältnisse auch für den zweiten Axialabstand a2 (und alle übrigen Axialabstände) in Bezug auf die größte Axialbreite ab3, bzw. ab1 oder ab2, bzw. in Bezug auf den Mittelwert der Axialbreiten ab1, ab2, ab3 aller Schneidkanten 4, 14, 24 der mehreren Schneidkörper 3, 13, 23.

Alle Schneidkanten 4, 14, 24 der mehreren Schneidkörper 3, 13, 23 mit bezüglich der Richtung senkrecht zur Drehrichtung 49, im Ausführungsbeispiel nach Fig. 2a bezüglich der Richtung der Drehachse 50, unmittelbar benachbarten Referenzpunkten 5, 15, 25 überlappen sich bezüglich der Richtung senkrecht zur Drehrichtung 49, im Ausführungsbeispiel nach Fig. 2a bezüglich der Richtung der Drehachse 50.

Wie in Fig. 2a dargestellt, weisen die Referenzpunkte 5, 15, 25 einen Winkelabstand Φ1, Φ2 zueinander auf. Der erste Referenzpunkt 5 ist in einem ersten Winkelabstand Φ1 zu dem zweiten Referenzpunkt 15 angeordnet. Der zweite Referenzpunkt 15 ist in einem zweiten Winkelabstand Φ2 zum dritten Referenzpunkt 25 angeordnet. Der erste Winkelabstand Φ1 ist bezüglich der Drehachse 50 gemessen. Der erste Referenzpunkt 5 weist zum zweiten Referenzpunkt 15 betragsmäßig denselben Winkelabstand auf wie der zweite Referenzpunkt 15 zum dritten Referenzpunkt 25. Der erste Winkelabstand Φ1 ist in einer Ebene senkrecht zur Drehachse 50 um die Drehachse 50 herum gemessen. Der zweite Winkelabstand Φ2 ist bezüglich der Drehachse 50 gemessen. Der zweite Winkelabstand Φ2 ist in einer Ebene senkrecht zur Drehachse 50 um die Drehachse 50 herum gemessen. Der zweite Winkelabstand Φ2 ist gleich groß wie der erste Winkelabstand Φ1. Der erste Winkelabstand Φ1 ist zwischen den in Richtung senkrecht zur Drehrichtung 49 unmittelbar benachbarten Referenzpunkten 5 und 15 gemessen. Der zweite Winkelabstand Φ2 ist zwischen den in Richtung senkrecht zur Drehrichtung 49 unmittelbar benachbarten Referenzpunkten 15 und 25 gemessen.

Die Winkelabstände Φ1 und Φ2 sind jeweils ganzzahlige Vielfache von Winkelwerten. Die Winkelwerte liegen in einem Winkelbereich.

Der Winkelbereich erstreckt sich von 10° bis 350°, insbesondere von 30° bis 330°, insbesondere von 60° bis 270°, bevorzugt von 90° bis 180°.

Der Winkelbereich erstreckt sich im Ausführungsbeispiel +/-5° um den Goldenen Winkel herum. Der Winkelbereich erstreckt sich von einem ersten Grenzwert bis zu einem zweiten Grenzwert. Der erste Grenzwert entspricht der Differenz aus dem Betrag des Goldenen Winkels und 5°. Der zweite Grenzwert entspricht der Summe aus dem Betrag des Goldenen Winkels und 5°. Der Goldene Winkel liegt innerhalb des Winkelbereichs und zählt zu diesem dazu.

In den Ausführungsbeispielen betragen die Winkelabstände Φ1, Φ2 jeweils ein ganzzahliges Vielfaches eines festen Winkelwerts. Der Begriff "fester Winkelwert" bedeutet in diesem Zusammenhang, dass aus dem Winkelbereich ein einziger Winkelwert ausgewählt ist, anhand dessen die Winkelabstände Φ1 und Φ2 bestimmt werden. Es kann aber auch vorgesehen sein, dass für verschiedene Winkelabstände verschiedene Winkelwerte aus dem Winkelbereich ausgewählt sind.

Die Menge der ganzzahligen Vielfachen umfasst auch das Einfache. Der Winkelabstand Φ1, Φ2 kann auch dem Einfachen des Winkelwerts entsprechen. Dies ist in den Ausführungsbeispielen der Fall. Der Winkelwert liegt in einem Winkelbereich von +/- 5° bezüglich des Goldenen Winkels. Der Goldene Winkel ist dadurch definiert, dass die Summe aus dem Goldenen Winkel und einem Gegenwinkel den Vollwinkel ergibt, und dass das Verhältnis von Goldenem Winkel zu Gegenwinkel gleich dem Verhältnis von Gegenwinkel zu Vollwinkel ist. Der Vollwinkel beträgt 360°. Der Goldene Winkel beträgt ungefähr 137,5°. Der Winkelbereich, in dem der Winkelwert liegt, umfasst den Goldenen Winkel. Es kann auch vorgesehen sein, dass der Winkelwert in einem Winkelbereich von 132, 5° bis 142,5° liegt. In den Ausführungsbeispielen liegt der Winkelwert in einem Winkelbereich von +/- 1° bezüglich des Goldenen Winkels. In den Ausführungsbeispielen liegt der Winkelwert in einem Winkelbereich von 136,5° bis 138,5°. In den Ausführungsbeispielen liegt der Winkelwert in einem Winkelbereich von +/- 0,5° bezüglich des Goldenen Winkels. In den Ausführungsbeispielen liegt der Winkelwert in einem Winkelbereich von 137° bis 138°.

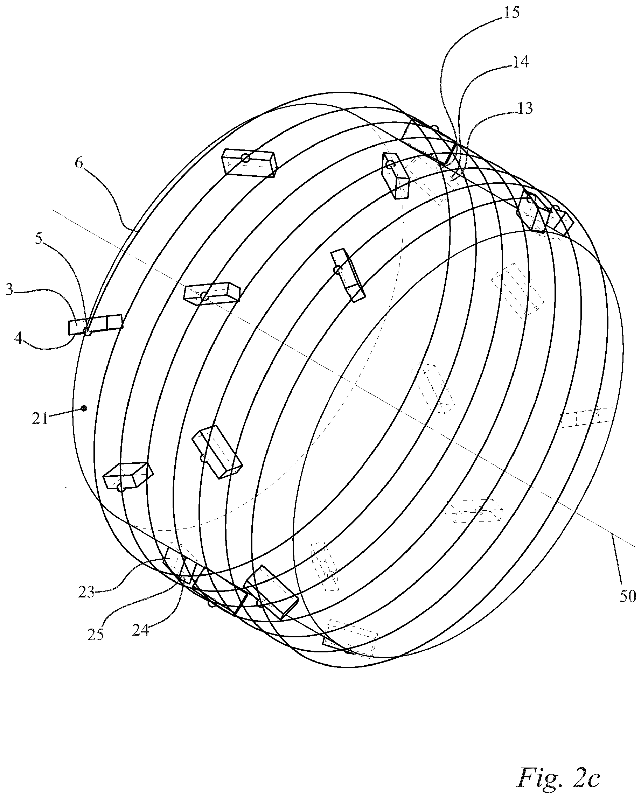

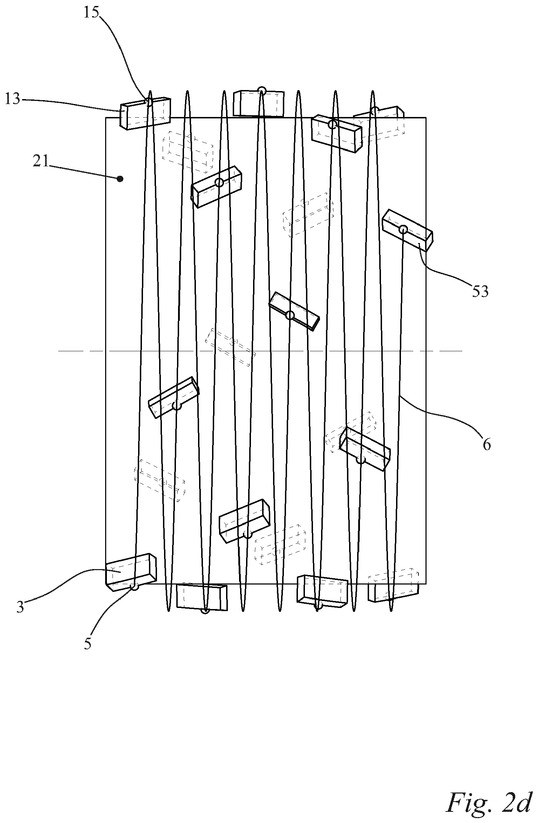

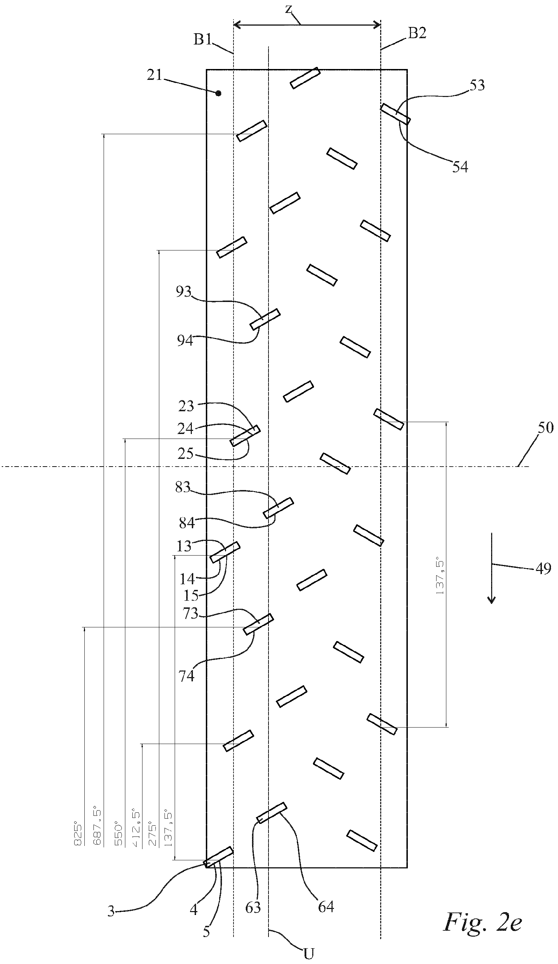

Oberhalb der Schneidenträgerfläche verläuft von dem Anfangsschneidkörper (im Ausführungsbeispiel nach Fig. 2a der erste Schneidkörper 3) bis zu dem Endschneidkörper 53 eine in Fig. 2b gestrichelt dargestellte gedachte Helixlinie 6. Die gedachte Helixlinie 6 verläuft unterbrechungsfrei von der Anfangsschneidkante zu der Endschneidkante. Die Anfangsschneidkante ist die Schneidkante 4 des Schneidkörpers 3. Die Endschneidkante ist die Schneidkante 54 des Schneidkörpers 53. Die Helixlinie 6 ist auch in den Figuren 2c und 2d dargestellt. Die Helixlinie 6 läuft um eine Zentralachse um. Die Zentralachse entspricht der Drehachse. Die Helixlinie 6 läuft zumindest teilweise, insbesondere vollständig, im Ausführungsbeispiel mehrfach um die Zentralachse um. Die Helixlinie 6 weist einen Fortschritt fa in Richtung senkrecht zur Drehrichtung 49 auf. Die Helixlinie 6 weist einen Fortschritt fb bezüglich eines Drehwinkels um die Drehachse 50 auf (Fig. 2b). Der Quotient fa/fb des Fortschritts fa der Helixlinie 6 und des Fortschritts fb der Helixlinie 6 entspricht einer Steigung der Helixlinie 6, insbesondere der Limes des Quotienten fa/fb für fb gegen Null. Der Quotient fa/fb, bzw. sein Limes gibt an jedem Punkt der Helixlinie 6 deren Steigung an. Zweckmäßig ist die Steigung der Helixlinie 6 größer als Null, insbesondere für jeden Punkt der Helixlinie 6. Insbesondere ist der Fortschritt fa proportional zum Fortschritt fb. Diese Beziehung zwischen dem Fortschritt fa und dem Fortschritt fb gilt insbesondere für jeden beliebigen Punkt der Helixlinie 6. Die Helixlinie 6 weist im Ausführungsbeispiel eine konstante Steigung auf. Es kann aber auch vorgesehen sein, dass die Helixlinie bezüglich der Richtung senkrecht zur Drehrichtung 49 unterschiedliche Steigungen aufweist. Es kann auch vorgesehen sein, dass die Helixlinie 6 einen Steigungssprung aufweist. Im Ausführungsbeispiel nach den Figuren 2a bis 2d ist der Fortschritt fa der Helixlinie 6 in Richtung der Drehachse 50 proportional zu dem Fortschritt fb der Helixlinie 6 bezüglich des Drehwinkels um die Drehachse 50. Im Ausführungsbeispiel nach den Figuren 2a, 2b, 2c, 2d, 2e weist die Helixlinie die Form einer Helix auf. Die Helix wird auch als Schraubenlinie oder als zylindrische Spirale bezeichnet. Es können aber in Abhängigkeit der Form der Schneidenträgerfläche auch andere Formen für die Helixlinie vorgesehen sein. Beispielsweise kann die Helixlinie die Form einer ebenen Spirale aufweisen (wie die Helixlinie 6 im Ausführungsbeispiel nach Fig. 3). Bei einer konischen Form der Schneidenträgerfläche weist die Helixlinie die Form einer konischen Spirale auf.

Bei einer welligen Kontur der Schneidenträgerfläche bezüglich der Richtung senkrecht zur Drehrichtung kann die Form der Helixlinie im Radius variieren.

Die Helixlinie 6 verläuft im Wesentlichen in konstantem Abstand zur Schneidenträgerfläche. Sämtliche Schneidkanten des Bearbeitungswerkzeugs 1 überstreichen bei Rotation des Bearbeitungswerkzeugs 1 eine Hüllfläche. Die Helixlinie 6 verläuft in dieser Hüllfläche. Im Ausführungsbeispiel nach Fig. 2c ist die Hüllfläche die Mantelfläche eines Zylinders. Es kann aber auch vorgesehen sein, dass die Hüllfläche eine beliebige andere Rotationsfläche ist. Dies ist beispielsweise bei einem Konturfräser der Fall. In diesem Fall variiert der Abstand der Helixlinie zur Drehachse bezüglich der Richtung der Drehachse. Der Fortschritt der Helixlinie in Richtung senkrecht zur Drehrichtung ist dann entlang der Hüllfläche in einer Ebene gemessen, die die Drehachse 50 enthält. Hierbei wird das Wegintegral der Schnittlinie zwischen dieser Ebene und der Hüllfläche von einem Ausgangspunkt auf der Helixlinie bis zu einem Fortschrittspunkt bestimmt. Der in einer Ebene senkrecht zur Drehachse und durch den Fortschrittspunkt gemessene Winkelabstand zwischen dem Fortschrittspunkt und einem Schnittpunkt der Ebene mit der Helixlinie definiert den Fortschritt der Helixlinie bezüglich eines Drehwinkels. Die Hüllfläche verläuft im Wesentlichen in konstantem Abstand zur Schneidenträgerfläche.

Die Helixlinie 6 besitzt eine Zentralachse, um die sie umläuft. Die Zentralachse entspricht der Drehachse 50 (Fig. 2c). Es kann vorgesehen sein, dass die Helixlinie nur teilweise, also weniger als 360° um die Drehachse umläuft. In den Ausführungsbeispielen läuft die Helixlinie 6 mehrfach um die Drehachse 50 um.

Die Schneidkanten 4, 14, 24 sämtlicher der mehreren Schneidkörper 3, 13, 23 sind zumindest teilweise auf der Helixlinie 6 angeordnet (Fig. 2c). Schneidkanten 4, 14, 24 von in Richtung senkrecht zur Drehrichtung 49 unmittelbar benachbarten Referenzpunkten 5, 15, 25 der mehreren Schneidkörper 3, 13, 23 sind auf der Helixlinie 6 unmittelbar benachbart.

Im Ausführungsbeispiel nach den Figuren 2a, 2b, 2c, 2d, 2e sind die Referenzpunkte 5, 15, 25 der Schneidkanten 4, 14, 24 aller der mehreren Schneidkörper 3, 13, 23 in einem sich in Richtung senkrecht zur Drehrichtung 49 auf beiden Seiten der Helixlinie 6 erstreckenden Helixbereich (nicht dargestellt) angeordnet. In Richtung senkrecht zur Drehrichtung 49, insbesondere in Richtung der Drehachse 50 erstreckt sich der Helixbereich über eine Helixbreite von 100%, insbesondere von 75%, insbesondere von 50%, insbesondere von 25%, insbesondere von 10% des Mittelwerts aller Axialbreiten der Schneidkanten 4, 14, 24 der mehreren Schneidkörper 3, 13, 23. Die Helixlinie 6 teilt den Helixbereich in zwei gleich große Hälften.

Das Bearbeitungswerkzeug 1 umfasst lediglich eine einzige Gruppe von mehreren Schneidkörpern 3, 13, 23, deren Schneidkanten 4, 14, 24 sich zwischen den Endpunkten 7, 8 der Gesamtschneide lückenlos bezüglich der Richtung senkrecht zur Drehrichtung 49 überlappen und deren Schneidkanten 4, 14, 24 zumindest teilweise auf einer Helixlinie 6 angeordnet sind.

Im Ausführungsbeispiel nach den Figuren 2a, 2b, 2c, 2d, 2e sind die Referenzpunkte 5, 15, 25 der Schneidkanten 4, 14, 24 aller der mehreren Schneidkörper 3, 13, 23 auf der um die Drehachse 50 umlaufenden gedachten Helixlinie 6 angeordnet.

Insbesondere sind außer den mehreren Schneidkörpern 3, 13, 23, deren Schneidkanten 4, 14, 24 zumindest teilweise auf der gedachten Helixlinie 6 angeordnet sind, keine weiteren Schneidkörper auf dem Grundkörper 2 angeordnet. Es kann aber auch vorgesehen sein, dass außer den mehreren Schneidkörpern 3, 13, 23, deren Schneidkanten 4, 14, 24 zumindest teilweise auf der gedachten Helixlinie 6 angeordnet sind, weitere Schneidkörper auf dem Grundkörper 2 angeordnet sind.

Es kann vorgesehen sein, dass mindestens eine erste Gruppe mehrerer Schneidkörper und eine zweite Gruppe mehrerer Schneidkörper am Grundkörper des Bearbeitungswerkzeugs angeordnet sind. Die einer Gruppe zugeordneten mehreren Schneidkörper können jeweils für sich genommen sämtliche oder auch nur einige der vorstehend beschriebenen Eigenschaften der mehreren Schneidkörper aufweisen. Insbesondere läuft eine der ersten Gruppe zugeordnete gedachte erste Helixlinie in entgegengesetztem Drehsinn zu einer der zweiten Gruppe zugeordneten zweiten Helixlinie um die Drehachse um. Die erste Helixlinie und die zweite Helixlinie haben die vorstehend beschriebenen Eigenschaften der Helixlinie 6. Die Schneidkanten der der ersten Helixlinie zugeordneten mehreren Schneidkörper der ersten Gruppe und die Schneidkanten der der zweiten Helixlinie zugeordneten mehreren Schneidkörper der zweiten Gruppe sind wie vorstehend im Zusammenhang mit den Figuren 2a, 2b, 2c und 2d beschrieben zu der jeweiligen Helixlinie positioniert.

Fig. 2e zeigt die Darstellung aus Fig. 2a. Die Schneidkante 4 des Schneidkörpers 3 ist die Anfangsschneidkante der Gesamtschneide, die aus den mehreren Schneidkörpers 3, 13, 23 gebildet ist. Die Schneidkante 54 des Schneidkörpers 53 ist die Endschneidkante der Gesamtschneide. Der Bereich der Gesamtschneide, der bezüglich der Richtung senkrecht zur Drehrichtung 49, im Ausführungsbeispiel nach Fig. 2e in Richtung der Drehachse 50 vollständig zwischen der Anfangsschneidkante und der Endschneidkante liegt, bildet einen Zwischenbereich der Gesamtschneide. Der Zwischenbereich erstreckt sich zwischen den bezüglich der Richtung senkrecht zur Drehrichtung 49, im Ausführungsbeispiel bezüglich der Richtung der Drehachse 50 einander zugewandten Endpunkten der Anfangs- und der Endschneidkante. In Fig. 2e sind gestrichelte Begrenzungsflächen B1 und B2 eingezeichnet, die sich jeweils senkrecht zur Richtung senkrecht zur Drehrichtung 49, in Fig. 2 senkrecht zur Drehachse 50 erstrecken. In Fig. 2e sind die Begrenzungsflächen B1 und B2 Ebenen. Es kann aber auch eine andere Form für die Begrenzungsflächen vorgesehen sein. Im Ausführungsbeispiel nach Fig. 3 entspricht die Form der Begrenzungsflächen B3 und B4 derjenigen der Mantelfläche eines Zylinders. In Fig. 2e erstreckt sich der Zwischenbereich der Gesamtschneide über eine Breite z. Der Bereich, der in Drehrichtung 49 hinter der Anfangsschneidkante (Schneidkante 4) und in Drehrichtung 49 hinter der Endschneidkante (Schneidkante 54) liegt, zählt nicht zum Zwischenbereich der Gesamtschneide dazu. Die Gesamtschneide weist Schneidkanten auf, die vollständig zwischen der Anfangsschneidkante und der Endschneidkante liegen. Bezüglich der Richtung senkrecht zur Drehrichtung 49 liegen weitere Schneidkanten nur teilweise im Zwischenbereich. In Fig. 2e liegen beispielhaft die Schneidkanten 24 und 34 nur teilweise im Zwischenbereich. Die Schneidkanten 64, 74, 84 und 94 liegen vollständig im Zwischenbereich.

Die Gruppe mehrerer Schneidkörper 3, 13, 23, die eine Gesamtschneide bilden und auf derselben Helixlinie 6 angeordnet sind, weist eine Mindestzahnzahl auf. Die Mindestzahnzahl ist die Anzahl von im Zwischenbereich der Gesamtschneide in Drehrichtung 49 mindestens hintereinanderliegenden Schneidkanten 24, 34, 64, 74, 84, 94 der Gruppe mehrerer Schneidkörper 3, 13, 23, die die Gesamtschneide bilden. Bei der Ermittlung der Mindestzahnzahl wird genau eine volle Umdrehung um 360° bezüglich der Drehachse 50 berücksichtigt. Jede Schneidkante wird nur einmal gezählt. Bei der Zählung werden auch Schneidkanten berücksichtigt, die lediglich in den Zwischenbereich der Gesamtschneide ragen. Bei der Zählung werden auch Schneidkanten berücksichtigt, die lediglich teilweise im Zwischenbereich der Gesamtschneide angeordnet sind. Schneidkanten, die nicht zu den mehreren Schneidkörpern zählen, werden bei der Ermittlung der Mindestzahnzahl nicht berücksichtigt.

Im Ausführungsbeispiel nach Fig. 2e entspricht die Mindestzahnzahl der Anzahl an Schneidkanten 24, 34, 64, 74, 84, 94 der mehreren Schneidkörper 3, 13, 23, die eine beliebig zwischen den Begrenzungsflächen B1 und B2 angeordnete, senkrecht zur Drehachse 50 verlaufende Schnittebene U mindestens schneidet.

Anders ausgedrückt entspricht die Mindestzahnzahl der Anzahl an Schneidkanten 64, 74, 84, 94 der mehreren Schneidkörper 3, 13, 23, die eine beliebig bezüglich der Richtung senkrecht zur Drehrichtung vollständig zwischen Anfangs- und Endschneidkante der Gesamtschneide angeordnete Kreislinie mindestens schneidet. Die Kreislinie läuft hierbei in einer Ebene senkrecht zur Drehachse 50 in Drehrichtung 49 um die Drehachse 50 um. Die Kreislinie verläuft hierbei auf der Hüllfläche sämtlicher Schneidkanten des Bearbeitungswerkzeugs. Insbesondere entspricht ein Radius der Kreislinie dem Abstand der Schneidkanten der mehreren Schneidkörper zu der Drehachse auf Höhe der Kreislinie.

Die Schneidkante der Gruppe der mehreren Schneidkörper 3, 13, 23 überlappen sich bezüglich der Richtung senkrecht zur Drehrichtung 49 derart, dass die Mindestzahnzahl mindestens 2, insbesondere mindestens 3 ist. In den Ausführungsbeispielen ist die Mindestzahnzahl 4. Es kann auch vorgesehen sein, dass die Mindestzahnzahl von 2 bis 16, insbesondere von 2 bis 8, insbesondere von 4 bis 8 beträgt.

Es kann vorgesehen sein, dass das Bearbeitungswerkzeug außer den mehreren Schneidkörpern noch weitere Schneidkörper umfasst, deren Schneidkanten Referenzpunkte mit anderen Winkelabständen zueinander als die der Referenzpunkte der Schneidkanten der mehreren Schneidkörper aufweisen. Im Ausführungsbeispiel ist dies nicht der Fall.

In den Figuren 2a und 2b kann eine beliebige Schneidkante 4, 14, 24 aus allen der mehreren Schneidkörper 3, 13, 23 als Referenzschneidkante ausgewählt werden. Der Referenzpunkt 5, 15, 25 dieser beliebig ausgewählten Referenzschneidkante weist zu den Referenzpunkten der Schneidkanten aller übrigen Schneidkörper 3, 13, 23 des Bearbeitungswerkzeugs 1 Winkelabstände $\Phi 1$, $\Phi 2$ auf, die einem ganzzahligen Vielfachen des festen Winkelwerts entsprechen.

Im Ausführungsbeispiel nach den Figuren 2a und 2b sind alle in Richtung senkrecht zur Drehrichtung 49, im Ausführungsbeispiel in Richtung der Drehachse 50, unmittelbar zueinander benachbarten Referenzpunkte 5, 15, 25 sämtlicher der mehreren Schneidkörper 3, 13, 23 in einem betragsmäßig gleich großen Winkelabstand zueinander angeordnet. Außer den mehreren Schneidkörpern 3, 13, 23 sind keine weiteren Schneidkörper am Grundkörper 2 angeordnet.

Ein Schneidkörper, der zu den mehreren Schneidkörpern 3, 13, 23 zählt, weist mindestens eine der folgenden Eigenschaften auf:

- der Winkelabstand des Referenzpunktes seiner Schneidkante zu einem in Richtung senkrecht zur Drehrichtung beabstandeten Referenzpunkt eines weiteren Schneidkörpers beträgt ein Vielfaches des Winkelwerts oder
- er ist auf einer gedachten Helixlinie angeordnet und seine Schneidkante ist erforderlich, um gemeinsam mit weiteren auf der Helixlinie angeordneten Schneidkanten die Gesamtschneide mit sich bezüglich der Richtung senkrecht zur Drehrichtung lückenlos überlappenden Schneidkanten und mit der Mindestzahnzahl 2 zu bilden.

Ausgehend vom ersten Referenzpunkt 5 der ersten Schneidkante 4 des ersten Schneidkörpers 3 ist der in Richtung senkrecht zur Drehrichtung 49 unmittelbar benachbarte zweite Referenzpunkt 15 der zweiten Schneidkante 14 des zweiten Schneidkörpers 13 um den Betrag des Winkelabstands $\Phi 1$ und den Axialabstand a1 versetzt auf dem Grundkörper 2 angeordnet. Im Ausführungsbeispiel nach Fig. 2a sind die Beträge des Winkelabstands $\Phi 1$ zwischen dem ersten Referenzpunkt 5 und dem in Richtung senkrecht zur Drehrichtung 49 unmittelbar benachbarten zweiten Referenzpunkt 15 und des Winkelabstands Φ2 zwischen dem zweiten Referenzpunkt 15 und dem in Richtung senkrecht zur Drehrichtung 49 unmittelbar benachbarten dritten Referenzpunkt 25 gleich groß. Im Ausführungsbeispiel nach Fig. 2a sind die Beträge des Axialabstands a1 zwischen dem ersten Referenzpunkt 5 und dem in Richtung senkrecht zur Drehrichtung 49 unmittelbar benachbarten zweiten Referenzpunkt 15 und des Axialabstands a2 zwischen dem zweiten Referenzpunkt 15 und dem in Richtung senkrecht zur Drehrichtung 49 unmittelbar benachbarten dritten Referenzpunkt 25 gleich groß. Der in Richtung senkrecht zur Drehrichtung 49 zum zweiten Referenzpunkt15 unmittelbar benachbarte dritte Referenzpunkt 25 ist gegenüber dem zweiten Referenzpunkt 25 um den Betrag des Winkelabstands Φ1 bzw. um den Betrag des Winkelabstands Φ2 und den Betrag des Axialabstands a1 bzw. den Betrag des Axialabstands a2 versetzt auf dem Grundkörper 2 angeordnet. Nach diesem Muster sind im Ausführungsbeispiel nach den Figuren 2a und 2b alle nachfolgend angeordneten Schneidkörper auf dem Grundkörper 2 angeordnet. Die Beträge aller Winkelabstände von in Richtung senkrecht zur Drehrichtung unmittelbar benachbarten Referenzpunkten sind im Ausführungsbeispiel gleich groß. Die Beträge aller Axialabstände von in Richtung senkrecht zur Drehrichtung unmittelbar benachbarten Referenzpunkten sind im Ausführungsbeispiel gleich groß.

Wie in Fig. 2a schematisch dargestellt, können die Schneidkanten 4, 14, 24 der mehreren Schneidkörper 3, 13, 23 jeweils gerade verlaufen. Bei einem gekrümmten Verlauf der Schneidkante kann im Referenzpunkt eine Tangente an die Schneidkante gelegt werden. In Fig. 2a sind an die schematisch dargestellten Schneidkanten 24 und 34 Tangenten angelegt. Die Tangenten 26 und 36 verlaufen jeweils durch den Referenzpunkt. In Ansicht in Richtung radial zur Drehachse 50 und auf einen Referenzpunkt 5, 15, 25 der mehreren Schneidkörper 3 ist die jeweilige Schneidkante 4, 14, 24 bzw. ihre Tangente 26, 36 gegenüber der Drehachse 50 um einen Achswinkel $\lambda 1$, $\lambda 2$ verkippt. Insbesondere verläuft die Tangente 26, 36 in Richtung senkrecht zur Richtung radial zur Drehachse 50. Der Achswinkel $\lambda 1$, $\lambda 2$ liegt zwischen -90° und +90°. Der Achswinkel $\lambda 1$, $\lambda 2$ ist der kleinere der beiden Winkel zwischen der Schneidkante 4, 14, 24 und einer Ebene senkrecht zur Drehrichtung 49 durch den Referenzpunkt 5, 15, 25. Der positive Achswinkel $\lambda 2$ ist in Ansicht auf die Außenseite der Schneidenträgerfläche gegen den Uhrzeigersinn gemessen. Der negative Achswinkel $\lambda 1$ ist in Ansicht auf die Außenseite der Schneidenträgerfläche im Uhrzeigersinn gemessen. Im Ausführungsbeispiel weist ein Teil der Schneidkanten 4, 14, 24 der mehreren Schneidkörper 3, 13, 23 den Achswinkel $\lambda 2$ von größer als 0° auf, und der anderer Teil weist einen Achswinkel $\lambda 1$ von kleiner als 0° auf.

Die Achswinkel $\lambda 1$, $\lambda 2$ können Werte von -90° bis +90° annehmen.

Die Drehachse 50 liegt in Ansicht radial zur Drehachse 50 und in Ansicht auf den jeweiligen Referenzpunkt 5, 15, 25 der jeweiligen verkippten Schneidkante 4, 14, 24 in einer Ebene mit dem Referenzpunkt 5, 15, 25. Der Achswinkel $\lambda 1$, $\lambda 2$ ist der Winkel zwischen der Schneidkante 4, 14, 24 und dieser Ebene.

Der erste Achswinkel $\lambda 1$ beträgt von größer 0° bis 90°, im Ausführungsbeispiel von 10° bis 80°. Der zweite Achswinkel $\lambda 2$ beträgt von -90° bis kleiner 0°, im Ausführungsbeispiel von -80° bis -10°. In den Ausführungsbeispielen sind der erste Achswinkel $\lambda 1$ und der zweite Achswinkel $\lambda 2$ betragsmäßig gleich groß.

Ein Teil der mehreren Schneidkörper 3, 13, 23, 33 weist Schneidkanten 4, 14, 24 mit dem ersten Achswinkel $\lambda 1$ auf. Ein anderer Teil der mehreren Schneidkörper 3, 13, 23, 33 weist Schneidkanten 34 mit dem zweiten Achswinkel $\lambda 2$ auf. Es kann auch vorgesehen sein, dass die Schneidkanten aller der mehreren Schneidkörper mit demselben Achswinkel, beispielsweise mit dem Achswinkel $\lambda 1$ angeordnet sind. Es kann auch vorgesehen sein, dass die Achswinkel der Schneidkanten aller der mehreren Schneidkörper betragsmäßig unterschiedlich groß sind.

In Fig. 2a ist exemplarisch ein Schneidkörper 33 mit einer Schneidkante 34 und einem Referenzpunkt 35 dargestellt. Die Schneidkante 34 ist mit dem zweiten Achswinkel $\lambda 2$ gegen die Drehachse orientiert. Der Grundkörper 2 besitzt eine Trennebene T. Die Trennebene T erstreckt sich senkrecht zur Drehachse 50. Die Trennebene T teilt den Grundkörper 2 in einen ersten Bereich und einen zweiten Bereich. Schneidkörper 3, 13, 23 mit Schneidkanten 4, 14, 14, deren Referenzpunkte 5, 15, 25 in dem ersten Bereich angeordnet sind, sind im ersten Achswinkel $\lambda 1$ gegen die Drehachse 50 orientiert. Schneidkörper 33 mit Schneidkanten 34, deren Referenzpunkte 35 in dem zweiten Bereich angeordnet sind, sind im zweiten Achswinkel $\lambda 2$ gegen die Drehachse 50 orientiert. Zwischen dem ersten Bereich und dem zweiten Bereich findet ein Vorzeichenwechsel der zugeordneten Achswinkel statt. Die Achswinkel sind so gewählt, dass die Schneidkanten der mehreren Schneidkörper bezüglich der Richtung der Drehachse 50 zum Inneren des Grundkörpers 2 hin kämmen.

Fig. 3 zeigt eine schematische Darstellung einer alternativen Ausführungsform. Der Grundkörper 2 weist ebenfalls eine zylindrische Form auf. Der Grundkörper 2 ist in Richtung der Drehachse 50 durch eine Stirnfläche 22 begrenzt. Die mehreren Schneidkörper 303, 313, 323 (ebenfalls wieder nur drei der vielen mehreren Schneidkörper exemplarisch beziffert) sind an der Stirnfläche 22 angeordnet. Die mehreren Schneidkörper 303, 313, 323 weisen Schneidkanten 304, 314, 324 auf. Jede Schneidkante 304, 314, 324 der mehreren Schneidkörper 303, 304, 314 besitzt genau einen Referenzpunkt 305, 315, 325. Bezüglich der Richtung senkrecht zur Drehrichtung 49 liegt der Referenzpunkt 305, 315, 325 in der Mitte der Schneidkante 304, 314, 324. Im Ausführungsbeispiel nach Fig. 3 liegt der Referenzpunkt 305, 315, 325 bezüglich der Richtung radial zur Drehachse 50 in der Mitte der Schneidkante 304, 314, 324. Im Ausführungsbeispiel nach Fig. 3 verläuft die Richtung senkrecht zur Drehrichtung 49 in Richtung radial zur Drehachse 49. In Richtung senkrecht zur Drehrichtung unmittelbar benachbarte Referenzpunkte 305, 315, 325 der Schneidkanten 304, 314, 324 der mehreren Schneidkörper 303, 313, 323 sind bezüglich der Drehachse 50 jeweils in Winkelabständen Φ1, Φ2 zueinander angeordnet. Für die Winkelabstände gilt dasselbe wie zum Ausführungsbeispiel nach den Figuren 2a bis 2e beschrieben.

Die Referenzpunkte 305, 315, 325 sind in Richtung radial zur Drehachse 50 zueinander beabstandet. Die Schneidkanten 304, 314, 315 von in Richtung senkrecht zur Drehrichtung 49, also in Richtung radial zur Drehachse 50 unmittelbar benachbarten Referenzpunkten 305, 315, 325 überlappen sich in Richtung senkrecht zur Drehrichtung 49.

Die Schneidkanten 304, 314, 324 der mehreren Schneidkörper 303, 313, 323 weisen in Richtung radial zur Drehachse 50 gemessene Radialbreiten rb1 auf. Die in Richtung senkrecht zur Drehrichtung 49 benachbarten Referenzpunkte 305, 315, 325 sind in einem Radialbereichsabstand ral zueinander angeordnet. Der Radialbereichsabstand ral entspricht der Differenz des größeren Radialabstands r2 und des kleineren Radialabstands r1 der radial benachbarten Referenzpunkte 315 und 305. Der Radialabstand r1, r2 ist der Abstand der Referenzpunkts 305, 315 zur Drehachse 50. Die Lagen der Radialbereichsabstände sind in Fig. 3 durch gestrichelte Kreislinien visualisiert, die jeweils durch die Referenzpunkte verlaufen.

Im Ausführungsbeispiel nach Fig. 3 sind die Radialbereichsabstände ral zwischen allen in Richtung senkrecht zur Drehrichtung 49 unmittelbar benachbarten Referenzpunkten 305, 315, 325 gleich groß. Es kann aber auch vorgesehen sein, dass die Radialbereichsabstände unterschiedlich groß sind. Auch die Radialbreiten rb1 aller Schneidkanten 304, 314, 325 der mehreren Schneidkörper 303, 313, 323 sind gleich groß. Es kann aber auch vorgesehen sein, dass die Radialbreiten unterschiedlich groß sind.

Der Radialbereichsabstand ral zwischen dem ersten Referenzpunkt 305 und dem zweiten Referenzpunkt 315 beträgt von 1% bis 100%, insbesondere von 8% bis 100%, insbesondere von 8% bis 55%, insbesondere von 1% bis 50%, insbesondere von 8% bis 50%, insbesondere von 8% bis 35%, insbesondere von 10% bis 35%, im Ausführungsbeispiel von 10% bis 30% der größten Radialbreite rb1 der Schneidkanten 304, 314, 324 der mehreren Schneidkörper 303, 313, 323.

Der Radialbereichsabstand ral zwischen dem ersten Referenzpunkt 305 und dem zweiten Referenzpunkt 315 beträgt von 1% bis 100%, insbesondere von 8% bis 100%, insbesondere von 8% bis 55%, insbesondere von 1% bis 50%, insbesondere von 8% bis 50%, insbesondere von 8% bis 35%, insbesondere von 10% bis 35%, im Ausführungsbeispiel von 10% bis 30% des Mittelwerts der Radialbreiten rb1 aller Schneidkanten 304, 314, 324 der mehreren Schneidkörper 303, 313, 323.

Auch im Ausführungsbeispiel nach Fig. 3 überlappen sich die Schneidkanten 304, 314, 324 der mehreren Schneidkörper 303, 313, 323 bezüglich der Richtung senkrecht zur Drehrichtung 49 lückenlos und bilden so eine Gesamtschneide. Die erste Schneidkante 304 ist eine Anfangsschneidkante der Gesamtschneide. Die Schneidkante 354 ist eine Endschneidkante der Gesamtschneide. Die Gesamtschneide weist einen Zwischenbereich auf. Der Zwischenbereich liegt bezüglich der Richtung senkrecht zur Drehrichtung 49, in Fig. 3 in Richtung radial zur Drehachse 50 vollständig zwischen der Anfangsschneidkante und der Endschneidkante. Der Zwischenbereich ist in Fig. 3 durch die Begrenzungsflächen B3 und B4 begrenzt, die als gestrichelte Linien dargestellt sind. Die Begrenzungsflächen B3 und B4 haben jeweils die Form einer Mantelfläche eines Zylinders. Sämtliche Schneidkanten des Bearbeitungswerkzeugs 1 sind bezüglich der Richtung senkrecht zur Drehrichtung 49 zwischen einem der Anfangsschneidkante zugeordneten Endpunkt und einem der Endschneidkante zugeordnetem Endpunkt der Gesamtschneide angeordnet.

Auf der Stirnfläche 22 verläuft eine gedachte Helixlinie 6 von der Anfangsschneidkante bis zur Endschneidkante. Im Unterschied zu der zum Ausführungsbeispiel nach den Figuren 2a, 2b, 2c, 2d, 2e beschriebenen Helixlinie besitzt die Helixlinie 6 nach Fig. 3 die Form einer ebenen Spirale. Ansonsten weist sie sämtliche dort beschriebene Eigenschaften auf. Die Richtung senkrecht zur Drehrichtung 49 erstreckt sich nun in Radial- und nicht in Axialrichtung. Dementsprechend ist ein Fortschritt der Helixlinie 6 in Richtung radial zur Drehachse 50 proportional zu einem Fortschritt der Helixlinie 6 bezüglich eines Drehwinkels um die Drehachse 50. Es kann aber auch eine variierende Steigung der Helixlinie 6 vorgesehen sein.

Die Mindestzahnzahl ist analog zu den Fig. 2a, 2b, 2c, 2d, 2e definiert. Die im Zwischenbereich der Gesamtschneide auf einer beliebigen um die Drehachse 50 umlaufenden Kreislinie (beispielsweise eine der gestrichelten Linien in Fig. 3 im Zwischenbereich) liegende kleinste Anzahl an Schneidkanten entspricht der Mindestzahnzahl. Die Schneidkanten 304, 314, 324 der mehreren Schneidkörper 303, 313, 323 überlappen sich bezüglich der Richtung senkrecht zur Drehrichtung 49, also bezüglich der Richtung radial zur Drehachse 50 derart, dass die Mindestzahnzahl mindestens 2, insbesondere mindestens 3, im Ausführungsbeispiel mindestens 4 ist. Die Schneidkanten 304, 314, 324 der mehreren Schneidkörper 303, 313, 323 überlappen sich bezüglich der Richtung senkrecht zur Drehrichtung 49, in Fig. 3 in Richtung radial zur Drehachse 50, jeweils nur teilweise gegenseitig.

Die Ausführungsbeispiele nach den Figuren 2a, 2b, 2c, 2d, 2e und 3 können auch miteinander kombiniert werden. Die Schneidkanten der mehreren Schneidkörper sind dann auf einer Helixlinie angeordnet, die sich ausgehend von einer auf der Stirnfläche eines zylindrischen Grundkörpers angeordneten Anfangsschneidkante zunächst in Form einer ebenen Spirale auf der Stirnfläche entwickelt und dann in Form einer auf der Umfangsfläche angeordneten Helix bis zu einer Endschneidkante fortsetzt. Die Fortsetzung erfolgt insbesondere nahtlos.

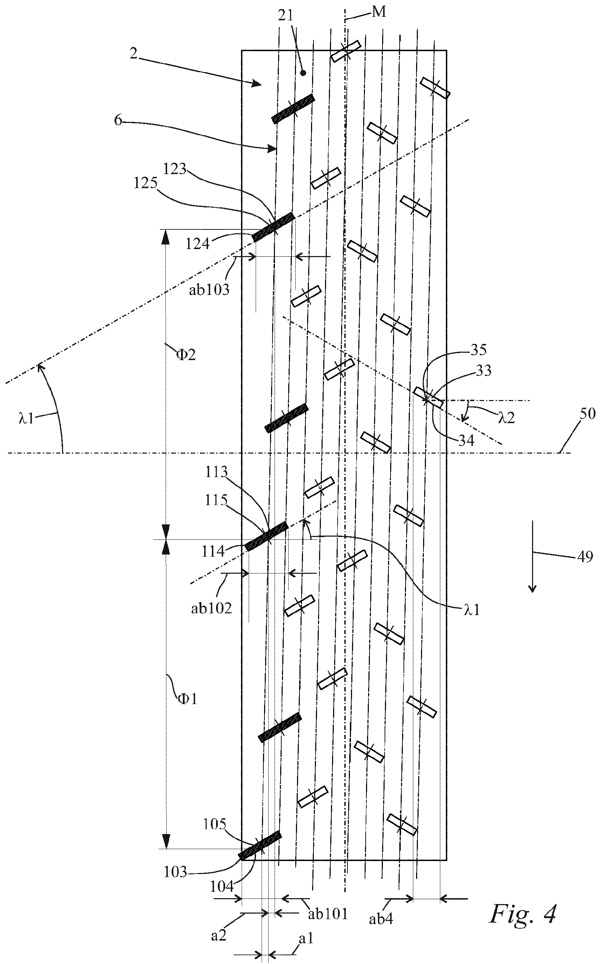

Fig. 4 zeigt in einer schematischen Abwicklungsdarstellung ein alternatives Ausführungsbeispiel für ein Bearbeitungswerkzeug 1. Der Grundaufbau des Bearbeitungswerkzeugs 1 nach Fig. 4 ist identisch zum Grundaufbau des Bearbeitungswerkzeugs 1 nach den Figuren 1a, 1b, 2a und 2b. Gleiche Bauteile bzw. gleich angeordnete Bauteile und gleiche Größen sind mit denselben Bezugszeichen gekennzeichnet. Zum Grundaufbau und zu gegenüber dem Ausführungsbeispiel nach den Figuren 1a, 1b, 2a und 2b unveränderter Gestaltung wird auf die Beschreibung zu dem Ausführungsbeispiel nach den Figuren 1a, 1b, 2a und 2b verwiesen. Im Folgenden werden lediglich die Unterschiede des Ausführungsbeispiels nach Fig. 4 zu dem nach den Figuren 1a, 1b, 2a und 2b beschrieben.

Das Bearbeitungswerkzeug 1 nach Fig. 4 unterscheidet sich vom Ausführungsbeispiel nach den Figuren 1a, 1b, 2a und 2b durch die Gestaltung der geschwärzt markierten Schneidkörper.

Die mehreren Schneidkörper umfassen in Fig. 4 exemplarisch bezifferte geschwärzte Schneidkörper 103, 113 und 123. Die Position des Schneidkörpers 33 auf dem Grundkörper 2 und die Ausgestaltung des Schneidkörpers 33 sind gegenüber dem Ausführungsbeispiel nach den Figuren 1a, 1b, 2a und 2b unverändert. Auch der Schneidkörper 33 ist weiterhin Bestandteil der mehreren Schneidkörper. Die Schneidkante 34 des Schneidkörpers 33 weist sowohl in den Figuren 2a und 2b als auch in Fig. 4 die Axialbreite ab4 auf.

Die Schneidkörper 3, 13 und 23 aus den Figuren 2a und 2b sind in Fig. 4 durch die Schneidkörper 103, 113 und 123 ersetzt. Die Schneidkörper 103, 113, 123 besitzen Schneidkanten 104, 114, 124 mit Referenzpunkten 105, 115, 125. Die Referenzpunkte 105, 115, 125 sind jeweils an derselben Stelle am Grundkörper 2 angeordnet, wie die Referenzpunkte 5, 15, 25 der Schneidkörper 3, 13, 23, die durch die Schneidkörper 103, 113, 123 ersetzt sind. Die Referenzpunkte 105, 115 und 125 der Schneidkörper 103, 113 und 123 sind in Richtung senkrecht zur Drehrichtung 49, im Ausführungsbeispiel in Richtung der Drehachse 50 jeweils unmittelbar benachbart zueinander angeordnet. Die Referenzpunkte 105, 115 und 125 weisen dieselben Axialabstände a1, a2 und a3 zueinander auf wie die Referenzpunkte 5, 15 und 25 im Ausführungsbeispiel nach Fig. 2.

Im Ausführungsbeispiel nach Fig. 4 besitzen die Schneidkanten 104, 114, 124 der Schneidkörper 103, 113 und 123 eine senkrecht zur Drehrichtung 49 gemessene Breite. Die Breiten erstrecken sich in Richtung der Drehachse 50 und werden als Axialbreiten ab101, ab102, ab103 bezeichnet. Die Axialbreiten ab101, ab102, ab103 sind in Richtung der Drehachse 50 gemessen. Die Axialbreite ab101 ist der Schneidkante 104 zugeordnet. Die Axialbreite ab102 ist der Schneidkante 114 zugeordnet. Die Axialbreite ab103 ist der Schneidkante 124 zugeordnet. Die Axialbreiten ab101, ab102 und ab103 sind gleich groß.

Die in Richtung senkrecht zur Drehrichtung 49 gemessenen Breiten der Schneidkanten der mehreren Schneidkörper 33, 103, 113, 123 sind unterschiedlich groß. Die Axialbreite ab101, ab102, ab103 der Schneidkante 104, 114, 124 des Schneidkörpers 103, 113, 123 und die Axialbreite ab4 der Schneidkante 34 des Schneidkörpers 33 sind unterschiedlich groß.

Dadurch, dass die Axialbreiten ab101, ab102 und ab103 der Schneidkanten 104, 114, 124 der Schneidkörper 103, 113, 123 größer sind und gleichzeitig die Anordnung der Referenzpunkte 105, 115, 125 am Grundkörper 2 unverändert gegenüber der Anordnung der Referenzpunkte 5, 15, 25 im Ausführungsbeispiel nach Fig. 2a und 2b ist, überlappen sich die Schneidkanten 104, 114, 124 in Richtung senkrecht zur Drehrichtung 49, im Ausführungsbeispiel in Richtung der Drehachse 50, in Fig. 4 in einem größeren Maß als in den Figuren 2a und 2b. Im Ausführungsbeispiel nach Fig. 4 überlappt sich ein Teil der mehreren Schneidkörper 33, 103, 113, 123 in einem größeren Maß als der andere Teil.

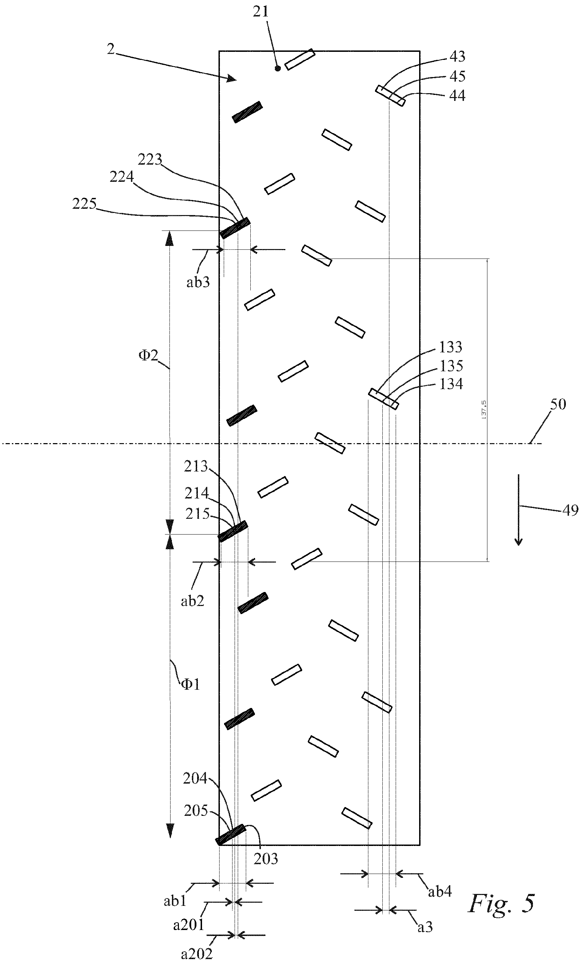

Fig. 5 zeigt in einer schematischen Abwicklungsdarstellung ein weiteres alternatives Ausführungsbeispiel für ein Bearbeitungswerkzeug 1. Der Grundaufbau des Bearbeitungswerkzeugs 1 nach Fig. 5 ist identisch zum Grundaufbau des Bearbeitungswerkzeugs 1 nach den Figuren 1a, 1b, 2a und 2b. Gleiche Bauteile bzw. gleich angeordnete Bauteile und gleiche Größen sind mit denselben Bezugszeichen gekennzeichnet. Zum Grundaufbau und zu gegenüber dem Ausführungsbeispiel nach den Figuren 1a, 1b, 2a und 2b unveränderter Gestaltung wird auf die Beschreibung zu dem Ausführungsbeispiel nach den Figuren 1a, 1b, 2a und 2b verwiesen. Im Folgenden werden lediglich die Unterschiede des Ausführungsbeispiels nach Fig. 5 zu dem nach den Figuren 1a, 1b, 2a und 2b beschrieben.

Das Bearbeitungswerkzeug 1 nach Fig. 5 unterscheidet sich vom Ausführungsbeispiel nach den Figuren 1a, 1b, 2a und 2b durch die Anordnung der geschwärzt markierten Schneidkörper auf dem Grundkörper 2.

Die mehreren Schneidkörper umfassen in Fig. 5 exemplarisch bezifferte geschwärzte Schneidkörper 203, 213 und 223. Zusätzlich ist ein weiterer Schneidkörper mit dem Bezugszeichen 43 gekennzeichnet. Auch der Schneidkörper 43 ist Bestandteil der mehreren Schneidkörper. Zusätzlich ist ein weiterer Schneidköper mit dem Bezugszeichen 133 gekennzeichnet. Auch der Schneidkörper 133 ist Bestandteil der mehreren Schneidkörper.

Die Schneidkörper 3, 13 und 23 aus Fig. 2a sind in Fig. 5 durch die Schneidkörper 203, 213 und 223 ersetzt. Die Schneidkörper 203, 213, 223 besitzen Schneidkanten 204, 214, 224 mit Referenzpunkten 205, 215, 225. Die Schneidkanten 204, 214 und 224 weisen dieselben Axialbreiten ab1, ab2 und ab3 auf wie die Schneidkanten 4, 14 und 24 im Ausführungsbeispiel nach Fig. 2a. Der Schneidkörper 43 besitzt eine Schneidkante 44 mit einem Referenzpunkt 45. Der Schneidkörper 133 besitzt eine Schneidkante 134 mit einem Referenzpunkt 135.

Die Referenzpunkte 205, 215, 225 sind jeweils an anderer Stelle am Grundkörper 2 angeordnet, wie die Referenzpunkte 5, 15, 25 der Schneidkörper 3, 13, 23, die durch die Schneidkörper 203, 213, 223 ersetzt sind. Die Referenzpunkte 205, 215 und 225 der Schneidkörper 203, 213 und 223 sind in Richtung senkrecht zur Drehrichtung 49, im Ausführungsbeispiel in Richtung der Drehachse 50 jeweils unmittelbar benachbart zueinander angeordnet. Die Referenzpunkte 205, 215 und 225 weisen andere Axialabstände a201, a202 und a203 zueinander auf als die Referenzpunkte 5, 15 und 25 im Ausführungsbeispiel nach Fig. 2a. Der Referenzpunkt 205 weist zum Referenzpunkt 215 den Axialabstand a201 auf. Der Referenzpunkt 215 weist zum Referenzpunkt 225 den Axialabstand a202 auf. Auch im Ausführungsbeispiel nach Fig. 5 sind die Referenzpunkte 205, 215, 225 bezüglich der Drehachse 50 zueinander beabstandet. Dementsprechend sind die Axialabstände a201, a202 in Richtung der Drehachse 50 gemessen.

Der Referenzpunkt 135 weist zum Referenzpunkt 45 den Axialabstand a3 auf. Der Axialabstand a3 zwischen den Referenzpunkten 135 und 45 entspricht betragsmäßig den Axialabständen a1 und a2 aus Fig. 2a. Die Referenzpunkte 135 und 45 sind in Richtung senkrecht zur Drehrichtung 49, im Ausführungsbeispiel in Richtung der Drehachse 50, zueinander beabstandet und liegen in diesen Richtungen unmittelbar benachbart zueinander.

Die Axialabstände a3, a201, a202 zwischen in Richtung der Drehachse 50 unmittelbar benachbarten Referenzpunkten 205, 215, 225,35 und 45 der Schneidkanten 204, 214, 224, 34 und 44 der mehreren Schneidkörper 203, 213, 223, 133 und 43 sind unterschiedlich groß. Die Axialabstände a201, a202 der Referenzpunkte 205, 215, 225 zueinander sind kleiner als die Axialabstände a1, a2 der Referenzpunkte 5, 15, 25 im Ausführungsbeispiel nach Fig. 2a. Dadurch verändert sich auch die Position der bezüglich der Richtung senkrecht zur Drehrichtung nachfolgend am Grundkörper 2 angeordneten Referenzpunkte im Vergleich zu Fig. 2a. Die Axialabstände a201, a202 der Referenzpunkte 205, 215, 225 zueinander sind kleiner als der Axialabstand a3 der Referenzpunkte 35 und 45 zueinander. Der Axialabstand a201, a202 beträgt von 1% bis 99%, insbesondere von 30% bis 99%, insbesondere von 50% bis 99%, insbesondere von 50% bis 90%, insbesondere von 30% bis 70% des Axialabstands a3.

Die Schneidkante 134 des Schneidkörpers 133 weist die Axialbreite ab4 auf, die betragsmäßig der Axialbreite ab4 aus Fig. 2a entspricht. Die Axialbreiten der Schneidkanten der übrigen, nicht geschwärzten Schneidkörper sind in Fig. 5 gleich groß wie die Axialbreiten der Schneidkanten der entsprechenden Schneidkörper in Fig. 2a. Der Schneidkörper 133 aus Fig. 5 entspricht dem Schneidkörper 33 aus Fig. 2a - lediglich der Referenzpunkt 135 des Schneidkörpers 133 ist an anderer Stelle auf der Schneidenträgerfläche angeordnet als zuvor der Referenzpunkt 35 des Schneidkörpers 33.

Dadurch, dass die Axialbreiten ab1, ab2, ab3 und ab4 der Schneidkanten 204, 214, 224 und 134 der Schneidkörper 203, 213, 223 und 133 im Ausführungsbeispiel nach Fig. 5 im Vergleich zum Ausführungsbeispiel nach Fig. 2a gleich groß sind und gleichzeitig die Anordnung der Referenzpunkte 205, 215, 225 am Grundkörper 2 so verändert ist, dass die Axialabstände a201, a202 der Referenzpunkte 205, 215, 225 zueinander im Ausführungsbeispiel nach Fig. 5 kleiner sind als die Axialabstände a1, a2 der Referenzpunkte 5, 15, 25 im Ausführungsbeispiel nach Fig. 2a, überlappen sich die Schneidkanten 204, 214, 224 in Richtung senkrecht zur Drehrichtung 49, im Ausführungsbeispiel in Richtung der Drehachse 50, in Fig. 5 in einem größeren Maß als in Fig. 2a. Im Ausführungsbeispiel nach Fig. 5 überlappt sich ein Teil der mehreren Schneidkörper 133, 43, 203, 213, 223 in einem größeren Maß als der andere Teil.

## Patentansprüche

1. Bearbeitungswerkzeug für die zerspanende Bearbeitung von Werkstoffen, wobei das Bearbeitungswerkzeug (1) zum drehenden Antrieb um eine Drehachse (50) vorgesehen ist, wobei das Bearbeitungswerkzeug (1) einen Grundkörper (2) mit einer Schneidenträgerfläche aufweist, wobei durch den Grundkörper (2) die Drehachse (50) verläuft, wobei auf der Schneidenträgerfläche Schneidkörper (3, 13, 23, 33, 43, 53, 63, 73, 83, 93, 103, 113, 123, 133, 203, 213, 223, 303, 313, 323, 353) mit je einer Schneidkante (4, 14, 24, 34, 44, 54, 64, 74, 84, 94, 104, 114, 124, 134, 204, 214, 224, 304, 314, 324, 354) angeordnet sind, wobei die Schneidkanten (4, 14, 24, 34, 44, 54, 64, 74, 84, 94, 104, 114, 124, 134, 204, 214, 224, 304, 314, 324, 354) sich während der zerspanenden Bearbeitung in einer um die Drehachse (50) umlaufenden Drehrichtung (49) drehen, wobei sich die Schneidkanten (4, 14, 24, 34, 44, 54, 64, 74, 84, 94, 104, 114, 124, 134, 204, 214, 224, 304, 314, 324, 354) einer Gruppe umfassend mehrere Schneidkörper (3, 13, 23, 33, 43, 53, 63, 73, 83, 93, 103, 113, 123, 133, 203, 213, 223, 303, 313, 323, 353) lückenlos bezüglich der Richtung senkrecht zur Drehrichtung (49) überlappen und so eine Gesamtschneide bilden, wobei eine Schneidkante (3, 103, 203, 303) der mehreren Schneidkörper (3, 13, 23, 33, 43, 53, 63, 73, 83, 93, 103, 113, 123, 133, 203, 213, 223, 303, 313, 323, 353) der Gruppe eine Anfangsschneidkante der Gesamtschneide ist, wobei eine Schneidkante (53, 353) der mehreren Schneidkörper (3, 13, 23, 33, 43, 53, 63, 73, 83, 93, 103, 113, 123, 133, 203, 213, 223, 303, 313, 323, 353) der Gruppe eine Endschneidkante der Gesamtscheide ist, wobei bezüglich der Richtung senkrecht zur Drehrichtung (49) vollständig zwischen der Anfangsschneidkante und der Endschneidkante ein Zwischenbereich der Gesamtschneide liegt, wobei sämtliche Schneidkanten (4, 14, 24, 34, 44, 54, 64, 74, 84, 94, 104, 114, 124, 134, 204, 214, 224, 304, 314, 324, 354) des Bearbeitungswerkzeugs (1) zwischen Endpunkten (7, 8) der Gesamtschneide angeordnet sind, wobei der eine Endpunkt (7) der Anfangsschneidkante und der andere Endpunkt (8) der Endschneidkante zugeordnet ist, wobei eine gedachte Helixlinie (6) von der Anfangsschneidkante zu der Endschneidkante verläuft, wobei die Helixlinie (6) eine Zentralachse aufweist, die der Drehachse (50) entspricht, wobei die Helixlinie (6) zumindest teilweise um die Zentralachse umläuft, wobei die Helixlinie (6) eine Steigung aufweist, die dem Quotienten aus einem Fortschritt der Helixlinie (6) in Richtung senkrecht zur Drehrichtung (49) und einem Fortschritt der Helixlinie (6) bezüglich eines Drehwinkels um die Drehachse (50) entspricht, wobei die Steigung der Helixlinie (6) insbesondere konstant ist, wobei sämtliche Schneidkanten (4, 14, 24, 34, 44, 54, 64, 74, 84, 94, 104, 114, 124, 134, 204, 214, 224, 304, 314, 324, 354) der Schneidkörper (3, 13, 23, 33, 43, 53, 63, 73, 83, 93, 103, 113, 123, 133, 203, 213, 223, 303, 313, 323, 353) der Gruppe zumindest teilweise auf der Helixlinie (6) angeordnet sind, wobei die Gruppe eine Mindestzahnzahl aufweist, wobei die Mindestzahnzahl durch die Anzahl von im Zwischenbereich der Gesamtschneide in Drehrichtung (49) des Bearbeitungswerkzeugs (1) mindestens hintereinanderliegenden Schneidkanten der Schneidkörper der Gruppe definiert ist, **dadurch gekennzeichnet, dass** sich die Schneidkanten (4, 14, 24, 34, 44, 54, 64, 74, 84, 94, 104, 114, 124, 134, 204, 214, 224, 304, 314, 324, 354) der Gruppe bezüglich der Richtung senkrecht zur Drehrichtung (49) derart überlappen, dass die Mindestzahnzahl mindestens 2, insbesondere mindestens 3 ist.

2. Bearbeitungswerkzeug nach Anspruch 1, **dadurch gekennzeichnet, dass** die Schneidkanten (4, 14, 24, 34, 44, 54, 64, 74, 84, 94, 104, 114, 124, 134, 204, 214, 224, 304, 314, 324, 354) der Gesamtschneide sich bezüglich der Richtung senkrecht zur Drehrichtung (49) jeweils nur teilweise gegenseitig überlappen.

3. Bearbeitungswerkzeug nach Anspruch 1 oder 2, **dadurch gekennzeichnet, dass** jede Schneidkante (4, 14, 24, 34, 44, 54, 64, 74, 84, 94, 104, 114, 124, 134, 204, 214, 224, 304, 314, 324, 354) der Schneidkörper (3, 13, 23, 33, 43, 53, 63, 73, 83, 93, 103, 113, 123, 133, 203, 213, 223, 303, 313, 323, 353) der Gruppe genau einen Referenzpunkt (5, 15, 25, 35, 45, 55, 65, 75, 85, 95, 105, 115, 125, 135, 205, 215, 225, 305, 315, 325, 355) aufweist, der insbesondere in Richtung senkrecht zur Drehrichtung (49) in der Mitte der Schneidkante (4, 14, 24, 34, 44, 54, 64, 74, 84, 94, 104, 114, 124, 134, 204, 214, 224, 304, 314, 324, 354) liegt, und dass die Referenzpunkte (5, 15, 25, 35, 45, 55, 65, 75, 85, 95, 105, 115, 125, 135, 205, 215, 225, 305, 315, 325, 355) der Schneidkanten (4, 14, 24, 34, 44, 54, 64, 74, 84, 94, 104, 114, 124, 134, 204, 214, 224, 304, 314, 324, 354) der Schneidkörper (3, 13, 23, 33, 43, 53, 63, 73, 83, 93, 103, 113, 123, 133, 203, 213, 223, 303, 313, 323, 353) der Gruppe in Richtung senkrecht zur Drehrichtung (49) zueinander beabstandet sind.

4. Bearbeitungswerkzeug nach Anspruch 3, **dadurch gekennzeichnet, dass** in Richtung senkrecht zur Drehrichtung (49) unmittelbar benachbarte Referenzpunkte (5, 15, 25, 35, 45, 55, 65, 75, 85, 95, 105, 115, 125, 135, 205, 215, 225, 305, 315, 325, 355) der Schneidkanten (4, 14, 24, 34, 44, 54, 64, 74, 84, 94, 104, 114, 124, 134, 204, 214, 224, 304, 314, 324, 354) der Schneidkörper (3, 13, 23, 33, 43, 53, 63, 73, 83, 93, 103, 113, 123, 133, 203, 213, 223, 303, 313, 323, 353) der Gruppe bezüglich der Drehachse (50) jeweils in Winkelabständen (Φ1, Φ2) zueinander angeordnet sind, dass die Winkelabstände (Φ1, Φ2) jeweils ganzzahlige Vielfache von Winkelwerten betragen, und dass die Winkelwerte in einem Winkelbereich von 10° bis 350°, insbesondere von 30° bis 330°, insbesondere von 60° bis 270°, bevorzugt von 90° bis 180° liegen.

5. Bearbeitungswerkzeug nach Anspruch 4, **dadurch gekennzeichnet, dass** die Winkelwerte in einem Winkelbereich von +/- 5°, insbesondere von +/- 1°, bevorzugt von +/- 0,5°, bezüglich des Goldenen Winkels liegen, wobei die Summe aus Goldenem Winkel und einem Gegenwinkel den Vollwinkel ergibt und das Verhältnis von Goldenem Winkel zu Gegenwinkel gleich dem Verhältnis von Gegenwinkel zu Vollwinkel ist.

6. Bearbeitungswerkzeug nach einem der Ansprüche 3 bis 5, **dadurch gekennzeichnet, dass** die Winkelabstände (Φ1, Φ2) dem Einfachen der Winkelwerte aus dem Winkelbereich entsprechen, und insbesondere, dass die Winkelabstände (Φ1, Φ2) alle gleich groß sind.

7. Bearbeitungswerkzeug nach einem der Ansprüche 3 bis 6, **dadurch gekennzeichnet, dass** die Referenzpunkte (5, 15, 25, 35, 45, 55, 65, 75, 85, 95, 105, 115, 125, 135, 205, 215, 225, 305, 315, 325, 355) in Richtung der Drehachse (50) und/oder in Richtung radial zur Drehachse (50) zueinander beabstandet sind.

8. Bearbeitungswerkzeug nach einem der Ansprüche 1 bis 7,
   **dadurch gekennzeichnet, dass** der Grundkörper (2) bezüglich der Drehachse (50) eine Umfangsfläche (21) aufweist, dass der Grundkörper (2) in Richtung der Drehachse (50) durch eine Stirnfläche (22) begrenzt ist, und dass die mehreren Schneidkörper (3, 13, 23, 33, 43, 53, 63, 73, 83, 93, 103, 113, 123, 133, 203, 213, 223, 303, 313, 323, 353) der Gruppe an der Umfangsfläche (21) und/oder an der Stirnfläche (22) angeordnet sind.

9. Bearbeitungswerkzeug nach einem der Ansprüche 1 bis 8,
   **dadurch gekennzeichnet, dass** die Schneidkanten (4, 14, 24, 34, 43, 53, 63, 73, 83, 93, 104, 114, 124, 134, 204, 214, 224) der mehreren Schneidkörper (3, 13, 23, 33, 43, 53, 63, 73, 83, 93, 103, 113, 123, 203, 213, 223) der Gruppe in Richtung der Drehachse (50) gemessene Axialbreiten (ab1, ab2, ab3, ab4, ab101, ab102, ab103) aufweisen und/oder, dass die Schneidkanten (304, 314, 324, 354) der mehreren Schneidkörper (303, 313, 323, 353) in Richtung radial zur Drehachse (50) gemessene Radialbreiten (rb1) aufweisen.

10. Bearbeitungswerkzeug nach Anspruch 9,
    **dadurch gekennzeichnet, dass** die in Richtung senkrecht zur Drehrichtung (49) unmittelbar benachbarten Referenzpunkte (5, 15, 25, 35, 45, 55, 65, 75, 85, 95, 105, 115, 125, 135, 205, 215, 225) der Gruppe in einem in Richtung der Drehachse (50) gemessenen Axialabstand (a1, a2, a3, a201, a202) zueinander angeordnet sind und/oder, dass die in Richtung senkrecht zur Drehrichtung (49) benachbarten Referenzpunkte (305, 315, 325, 355) der Gruppe in einem Radialbereichsabstand (ral) zueinander angeordnet sind, wobei der Radialbereichsabstand (ral) der Differenz des größeren Radialabstands (r2) und des kleineren Radialabstands (r1) der radial benachbarten Referenzpunkte (305, 315, 325, 355) entspricht.

11. Bearbeitungswerkzeug nach den Ansprüchen 9 und 10,
    **dadurch gekennzeichnet, dass** der Axialabstand (a1, a2, a3, a201, a202) von 1% bis 50%, insbesondere von 8% bis 50%, insbesondere von 8% bis 35% der größten Axialbreite (ab1, ab2, ab3, ab4, ab101, ab102, ab103) beträgt und/oder, dass der Radialbereichsabstand (ral) von 1% bis 50%, insbesondere von 8% bis 50%, insbesondere von 8% bis 35% der größten Radialbreite (rb1) beträgt.

12. Bearbeitungswerkzeug nach einem der Ansprüche 9 bis 11,
    **dadurch gekennzeichnet, dass** die Schneidenträgerfläche in Drehrichtung (49) hinter der Anfangsschneidkante und/oder hinter der Endschneidkante einen sich über die gesamte Axialbreite (ab1) und/oder Radialbreite (rb1) der Anfangsschneidkante und/oder der Endschneidkante erstreckenden, um die Drehachse (50) umlaufenden Randbereich aufweist, und dass im Randbereich zusätzlich zu den mehreren Schneidkörpern (3, 13, 23, 33, 43, 53, 63, 73, 83, 93, 103, 113, 123, 133, 203, 213, 223, 303, 313, 323, 353) der Gruppe mindestens ein weiterer Schneidkörper angeordnet ist.

13. Bearbeitungswerkzeug nach einem der Ansprüche 9 bis 12,
    **dadurch gekennzeichnet, dass** die Axialbreite (ab1) und/oder die Radialbreite (rb1) zumindest der Anfangsschneidkante und/oder zumindest der Endschneidkante größer oder kleiner ist als diejenige einer Schneidkante eines Schneidkörpers (33) der mehreren Schneidkörper (3, 13, 23, 33, 43, 53, 63, 73, 83, 93, 103, 113, 123, 133, 203, 213, 223, 303, 313, 323, 353) außerhalb des Randbereichs.

14. Bearbeitungswerkzeug nach einem der Ansprüche 9 bis 13,
    **dadurch gekennzeichnet, dass** die Axialabstände (a1, a2, a3, a201, a202) aller in Richtung der Drehachse (50) unmittelbar benachbarten Referenzpunkte (5, 15, 25, 35, 45, 55, 65, 75, 85, 95, 105, 115, 125, 135, 205, 215, 225) der Gruppe gleich groß sind und/oder, dass die Radialbereichsabstände (rb1) aller in Richtung radial zur Drehachse (50) unmittelbar benachbarter Referenzpunkte (305, 315, 325, 355) der Gruppe gleich groß sind.

15. Bearbeitungswerkzeug nach einem der Ansprüche 1 bis 14,
    **dadurch gekennzeichnet, dass** das Bearbeitungswerkzeug (1) lediglich eine einzige Gruppe von Schneidkörpern (3, 13, 23, 33, 43, 53, 63, 73, 83, 93, 103, 113, 123, 133, 203, 213, 223, 303, 313, 323, 353) umfasst, deren Schneidkanten (4, 14, 24, 34, 44, 54, 64, 74, 84, 94, 104, 114, 124, 134, 204, 214, 224, 304, 314, 324, 354) sich zwischen den Endpunkten der Gesamtschneide lückenlos bezüglich der Richtung senkrecht zur Drehrichtung (49) überlappen und deren Schneidkanten (4, 14, 24, 34, 44, 54, 64, 74, 84, 94, 104, 114, 124, 134, 204, 214, 224, 304, 314, 324, 354) zumindest teilweise auf einer Helixlinie (6) angeordnet sind.

10

1

22

49

50

14

13

21

2

11

3

23

24

4

*Fig. 1a*

*Fig. 1b*

*Fig. 2a*

*Fig. 2b*

*Fig. 2c*

*Fig. 2d*

*Fig. 2e*

*Fig. 3*

*Fig. 4*

*Fig. 5*

Europäisches Patentamt
European Patent Office
Office européen des brevets

# EUROPÄISCHER RECHERCHENBERICHT

Nummer der Anmeldung

EP 22 15 8518

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 353 758 A1 (LEDERMANN GMBH & CO KG [DE]) 10. August 2011 (2011-08-10) | 1-4, 6-10,12, 14,15 | INV. B23C5/18 B23C5/04 |
| A | * Absatz [0022] – Absatz [0023]; Abbildungen 1,2,6,7,9 * * Zeile 22, Absatz 24 – Zeile 32 * ----- | 5,11,13 | B27G13/02 |
| X | EP 3 354 387 A1 (LEDERMANN GMBH & CO KG [DE]) 1. August 2018 (2018-08-01) | 1-4, 6-10,12, 14,15 | |
| A | * Absatz [0014] – Absatz [0023]; Abbildung 1 * ----- | 5,11,13 | |
| X | US 2014/234038 A1 (FREUND DAVID GROVER [US] ET AL) 21. August 2014 (2014-08-21) | 1-4, 6-10,12, 14,15 | |
| A | * Absatz [0039] – Absatz [0057]; Abbildung 3 * ----- | 5,11,13 | |
| X | CN 103 192 434 A (LEUCO PREC TOOL TAICANG CO LTD) 10. Juli 2013 (2013-07-10) | 1-4, 6-10,12, 14,15 | RECHERCHIERTE SACHGEBIETE (IPC) |
| A | * Seiten 1,2; Abbildung 1 * ----- | 5,11,13 | B23C B27G |

Der vorliegende Recherchenbericht wurde für alle Patentansprüche erstellt

| Recherchenort | Abschlußdatum der Recherche | Prüfer |
|---|---|---|
| Den Haag | 1. September 2022 | Prelovac, Jovanka |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 8518

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-09-2022

| Im Recherchenbericht angeführtes Patentdokument | Datum der Veröffentlichung | Mitglied(er) der Patentfamilie | Datum der Veröffentlichung |
|---|---|---|---|
| EP 2353758 A1 | 10-08-2011 | AT 548147 T | 15-03-2012 |
| | | AU 2011209146 A1 | 19-07-2012 |
| | | BR 112012018794 A2 | 03-05-2016 |
| | | CA 2788062 A1 | 04-08-2011 |
| | | CN 102844138 A | 26-12-2012 |
| | | DK 2353758 T3 | 18-06-2012 |
| | | EP 2353758 A1 | 10-08-2011 |
| | | ES 2384026 T3 | 28-06-2012 |
| | | HR P20120455 T1 | 30-06-2012 |
| | | IT MI20110016 U1 | 29-07-2011 |
| | | JP 5674815 B2 | 25-02-2015 |
| | | JP 2013517952 A | 20-05-2013 |
| | | PL 2353758 T3 | 31-08-2012 |
| | | PT 2353758 E | 25-05-2012 |
| | | RU 2012134094 A | 10-03-2014 |
| | | SI 2353758 T1 | 31-07-2012 |
| | | TW 201134583 A | 16-10-2011 |
| | | UA 101794 C2 | 25-04-2013 |
| | | US 2012282045 A1 | 08-11-2012 |
| | | WO 2011092000 A1 | 04-08-2011 |
| EP 3354387 A1 | 01-08-2018 | KEINE | |
| US 2014234038 A1 | 21-08-2014 | KEINE | |
| CN 103192434 A | 10-07-2013 | KEINE | |

EPO FORM P0461

Für nähere Einzelheiten zu diesem Anhang : siehe Amtsblatt des Europäischen Patentamts, Nr.12/82